(19) Europäisches Patentamt
European Patent Office
Office européen des brevets

(11) EP 4 428 173 A1

(12) **EUROPEAN PATENT APPLICATION**
published in accordance with Art. 153(4) EPC

(43) Date of publication:
**11.09.2024 Bulletin 2024/37**

(21) Application number: **23857695.3**

(22) Date of filing: **22.08.2023**

(51) International Patent Classification (IPC):
***C08G 64/16*** *(2006.01)* ***C08G 64/08*** *(2006.01)*
***C08L 69/00*** *(2006.01)* ***G02B 1/04*** *(2006.01)*
***C08G 64/04*** *(2006.01)*

(52) Cooperative Patent Classification (CPC):
**C08G 64/04; C08G 64/08; C08G 64/16; C08L 69/00; G02B 1/04**

(86) International application number:
**PCT/KR2023/012404**

(87) International publication number:
**WO 2024/043663 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.08.2022 KR 20220107093**
**18.11.2022 KR 20220155556**
**18.11.2022 KR 20220155560**
**18.11.2022 KR 20220155561**
**18.11.2022 KR 20220155562**

(71) Applicant: **LG Chem, Ltd.**
**Yeongdeungpo-gu**
**Seoul 07336 (KR)**

(72) Inventors:
- **CHOI, Il Hwan**
  **Daejeon 34122 (KR)**
- **KIM, Kyeongmun**
  **Daejeon 34122 (KR)**
- **BAE, Jaesoon**
  **Daejeon 34122 (KR)**
- **BAEK, Hyeonwoo**
  **Daejeon 34122 (KR)**
- **YOO, Seungmin**
  **Daejeon 34122 (KR)**
- **LEE, Seungmook**
  **Daejeon 34122 (KR)**
- **YIM, Hye Jin**
  **Daejeon 34122 (KR)**

(74) Representative: **Hoffmann Eitle**
**Patent- und Rechtsanwälte PartmbB**
**Arabellastraße 30**
**81925 München (DE)**

(54) **POLYCARBONATE RESIN AND METHOD FOR PRODUCING SAME**

(57) The present specification relates to a polycarbonate resin having a high shear viscosity of 10Pa·s to 260Pa·s at 250°C.

EP 4 428 173 A1

## Description

[Technical Field]

This application claims priority to and the benefit of Korean Patent Application No. 10-2022-0107093 filed in the Korean Intellectual Property Office on August 25, 2022 and Korean Patent Application Nos. 10-2022-0155556, 10-2022-0155560, 10-2022-0155561, and 10-2022-0155562 filed in the Korean Intellectual Property Office on November 18, 2022, the entire contents of which are incorporated herein by reference.
The present specification relates to a polycarbonate resin and a preparation method thereof.

[Background Art]

Optical glass or optical resin is used as an optical material for plastic optical products and optical films such as various lenses, prisms, optical disc substrates, and optical fibers. Although optical glass has excellent heat resistance, transparency, dimensional stability, and chemical resistance, the optical glass has the problems of high material cost, poor moldability, and low productivity.
Meanwhile, optical materials including optical resins can be mass-produced by injection molding. As the optical resin, a polycarbonate resin, a polyester resin, a polyester-carbonate resin, and the like are used.
However, the optical resin has a disadvantage in that processability deteriorates due to its insufficient fluidity. Therefore, it may be difficult to apply the optical resin to the injection molding of an article that requires the aforementioned precision. In order to apply the resin to injection molding, molding temperature, mold temperature, and the like need to be increased, but the molding cycle becomes longer, so that the molding cost increases, or the resin deteriorates, the color deteriorates during molding, and the like.
To solve this problem, examples of a method of improving the fluidity of a resin during the molding of an optical material include methods of lowering the viscosity, lowering the weight average molecular weight, adding a low-molecular weight oligomer, widening the molecular weight distribution, and the like, but excellent physical properties inherent in the resin, such as heat resistance and impact resistance, tend to deteriorate.
Therefore, continuous attempts have been made to improve processability while maintaining the advantages of a resin.

[Detailed Description of the Invention]

[Technical Problem]

An exemplary embodiment of the present specification has been made in an effort to provide a polycarbonate resin and a method for preparing the same.
Another exemplary embodiment of the present specification has been made in an effort to provide a polycarbonate resin composition including the above-described polycarbonate resin and a molded article prepared from the polycarbonate resin composition.

[Technical Solution]

An exemplary embodiment of the present specification provides a polycarbonate resin having a high shear viscosity of 10 Pa·s to 260 Pa·s at 250°C.
An exemplary embodiment of the present specification provides a polycarbonate resin including a first unit of the following Chemical Formula 1; a second unit of the following Chemical Formula 2; and a third unit of the following Chemical Formula 3.

[Chemical Formula 1]

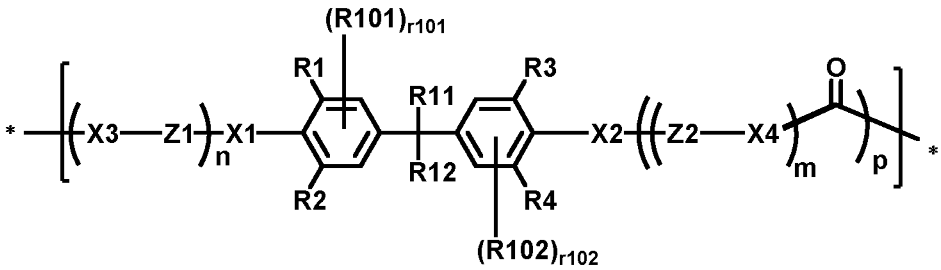

In Chemical Formula 1,

X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a fused ring group of a substituted or unsubstituted aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6,
p is an integer of 1 to 6,
when m, n and p are each 2 or higher, two or more structures in each parenthesis are the same as or different from each other, and
* means a moiety linked to the main chain of the resin,

[Chemical Formula 2]

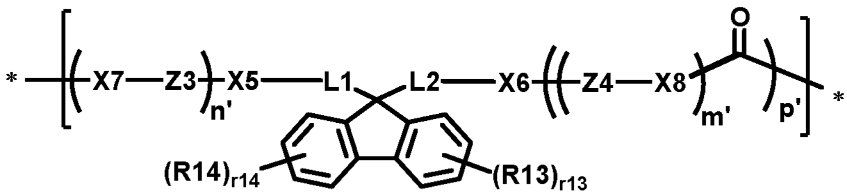

in Chemical Formula 2,
X5 to X8 are the same as or different from each other, and are each independently O or S,
L1 and L2 are the same as or different from each other, and are each independently a substituted or unsubstituted arylene group; or a substituted or unsubstituted heteroarylene group,
R13 and R14 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
Z3 and Z4 are the same as or different from each other, and are each independently a substituted or unsubstituted alkylene group; or a substituted or unsubstituted cycloalkylene group,
m' and n' are each an integer from 0 to 6,
p' is an integer from 1 to 6,

r13 and r14 are each an integer from 1 to 4,
when r13, r14, m', n' and p' are each 2 or higher, two or more structures in each parenthesis are the same as or different from each other, and
* means a moiety linked to the main chain of the resin,

[Chemical Formula 3]

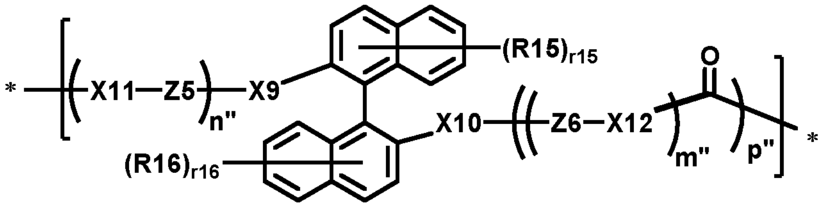

in Chemical Formula 3,
X9 to X12 are the same as or different from each other, and are each independently O or S,
Z5 and Z6 are the same as or different from each other, and are each independently a substituted or unsubstituted alkylene group; or a substituted or unsubstituted cycloalkylene group,
R15 and R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
m" and n" are each an integer from 0 to 6,
p" is an integer from 1 to 6,
r15 and r16 are each an integer from 1 to 6,
when r15, r16, m", n" and p" are each 2 or higher, two or more structures in each parenthesis are the same as or different from each other, and
* means a moiety linked to the main chain of the resin.

Further, an exemplary embodiment of the present specification provides a method for preparing the polycarbonate resin, the method including: polymerizing a composition for preparing a polycarbonate resin, including: a compound of the following Chemical Formula 1a; a compound of the following Chemical Formula 2a; a compound of the following Chemical Formula 3a; and a polycarbonate precursor in which a high shear viscosity of the polycarbonate resin is 10 Pa·s to 260 Pa·s at 250°C.

[Chemical Formula 1a]

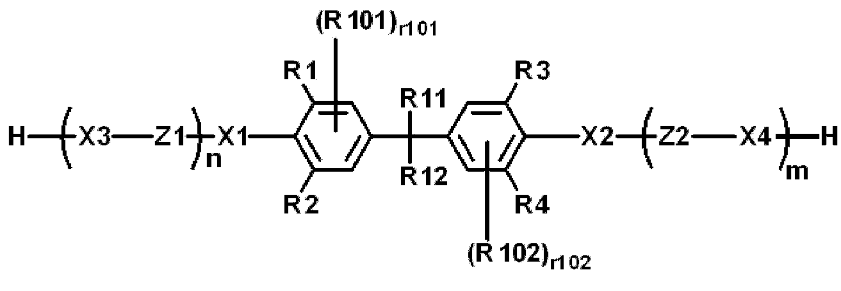

In Chemical Formula 1a,

X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a fused ring group of a substituted or unsubstituted aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or

unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,

R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,

r101 is 1 or 2, and when r101 is 2, two R101's are the same as or different from each other,

r102 is 1 or 2, and when r102 is 2, two R102's are the same as or different from each other,

m and n are each an integer from 0 to 6, and

when m and n are each 2 or higher, two or more structures in each parenthesis are the same as or different from each other,

[Chemical Formula 2a]

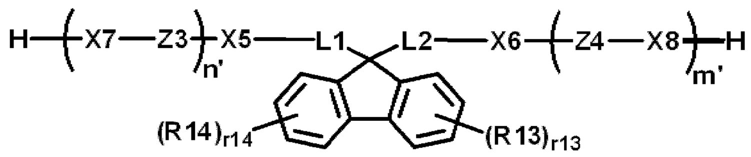

[Chemical Formula 3a]

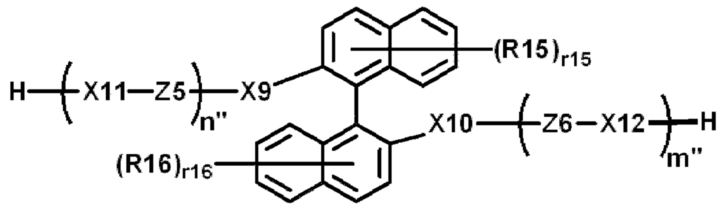

in Chemical Formulae 2a and 3a,

X5 to X12 are the same as or different from each other, and are each independently O or S,

L1 and L2 are the same as or different from each other, and are each independently a substituted or unsubstituted arylene group; or a substituted or unsubstituted heteroarylene group,

Z3 to Z6 are the same as or different from each other, and are each independently a substituted or unsubstituted alkylene group; or a substituted or unsubstituted cycloalkylene group,

R13 to R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,

r13 and r14 are each an integer from 1 to 4,

r15 and r16 are each an integer from 1 to 6,

m', m", n' and n" are each an integer from 0 to 6, and

when r13 to r16, m', m", n' and n" are each 2 or higher, two or more structures in each parenthesis are the same as or different from each other.

Another exemplary embodiment of the present specification provides a polycarbonate resin composition including the polycarbonate resin according to the above-described exemplary embodiment.

Still another exemplary embodiment of the present specification provides a molded article including the polycarbonate resin composition according to the above-described exemplary embodiment.

[Advantageous Effects]

The polycarbonate resin according to an exemplary embodiment of the present specification satisfies the aforementioned high shear viscosity, has a shorter molecular relaxation time due to a lower high shear viscosity than resins, has a shorter cooling time in an injection mold, and has excellent processability.

By using the polycarbonate resin according to the exemplary embodiments of the present specification, an

excellent optical lens, optical film, optical thin film, optical resin, optical fiber, or LED encap having a small thickness can be obtained.

[Best Mode]

Hereinafter, the present specification will be described in more detail.
The polycarbonate resin according to an exemplary embodiment of the present specification has a high shear viscosity of 10 Pa-s to 260 Pa.s at 250°C, and thus has a low processing load. Therefore, phenomena such as weld lines, cracks, warpage, and birefringence during injection molding are reduced.
The high shear viscosity according to an exemplary embodiment of the present specification is measured at normal pressure, room temperature to 320°C, and 0.1 Hz to 100 Hz using a hybrid rheometer (discovery (HR-2)).
According to an exemplary embodiment of the present specification, the polycarbonate resin has a high shear viscosity of 10Pa·s to 260Pa·s at 250°C. The polycarbonate resin has a high shear viscosity of preferably 30 Pa·s to 260 Pa·s, more preferably 50 Pa·s to 260 Pa·s, and even more preferably 81.9 Pa·s to 258 Pa·s.
In the present specification, the room temperature is the same as defined in the art, and generally means the temperature of an experimental room, a laboratory, and the like, refers to the temperature used when an experiment is conducted without specifying or adjusting the temperature or when a sample and a material are left to stand in a room, and means 15°C to 25°C in the art.
In the present specification, the normal pressure is the same as defined in the art, and generally means a pressure of about 1 atmosphere, which is the same as normal atmospheric pressure.
When one part "includes" one constituent element in the present specification, unless otherwise specifically described, this does not mean that another constituent element is excluded, but means that another constituent element may be further included.
Unless otherwise defined in the present invention, all technical and scientific terms used in the present invention have the same meaning as commonly understood by one with ordinary skill in the art to which the present invention pertains. Although methods and materials similar to or equivalent to those described in the present invention may be used in the practice or in the test of exemplary embodiments of the present invention, suitable methods and materials will be described below. All publications, patent applications, patents, and other references mentioned in the present invention are hereby incorporated by reference in their entireties, and in the case of conflict, the present invention, including definitions, will control unless a particular passage is mentioned. In addition, the materials, methods, and examples are illustrative only and are not intended to be limiting.
According to an exemplary embodiment of the present specification, the polycarbonate resin has a high shear viscosity of 10 Pa·s to 260 Pa·s at 10 Hz or 63 Hz. According to an exemplary embodiment of the present specification, the polycarbonate resin has a high shear viscosity of 10 Pa·s to 260 Pa·s at 10 Hz.
According to an exemplary embodiment of the present specification, the polycarbonate resin has a high shear viscosity of 10 Pa·s to 260 Pa·s at 63 Hz.
According to an exemplary embodiment of the present specification, the polycarbonate resin has a high shear viscosity of 10 Pa·s to 260 Pa·s at any one or more of 250°C and 10 Hz and 250°C and 63 Hz.
According to an exemplary embodiment of the present specification, the polycarbonate resin has a high shear viscosity of 10 Pa·s to 260 Pa·s at 250°C and 10 Hz and/or 250°C and 63 Hz.
According to an exemplary embodiment of the present specification, the polycarbonate resin has a high shear viscosity of 10 Pa·s to 260 Pa·s at 250°C and 10 Hz and 250°C and 63 Hz.
According to an exemplary embodiment of the present specification, the polycarbonate resin has a high shear viscosity of 10 Pa·s to 260 Pa·s at 250°C and 10 Hz or 250°C and 63 Hz.
According to an exemplary embodiment of the present specification, the polycarbonate resin has a high shear viscosity of 10 Pa·s to 260 Pa·s at 250°C and 10 Hz.
According to an exemplary embodiment of the present specification, the polycarbonate resin has a high shear viscosity of 10 Pa·s to 260 Pa·s at 250°C and 63 Hz.
In the present specification, when the polycarbonate resin has the above-described high shear viscosity at the above-described frequency, there is an advantage in that processing is facilitated due to excellent flowability during processing using the extrusion/injection of a thermoplastic polymer.
According to an exemplary embodiment of the present specification, the polycarbonate resin has a high shear viscosity of 10 Pa·s to 260 Pa·s at any one or more of 250°C and 10 Hz and 250°C and 63 Hz. The polycarbonate resin has a high shear viscosity of preferably 30 Pa·s to 260 Pa.s, more preferably 50 Pa-s to 260 Pa.s, and even more preferably 81.9 Pa·s to 258 Pa·s.
According to an exemplary embodiment of the present specification, the polycarbonate resin has a high shear viscosity of 10 Pa·s to 260 Pa·s at 250°C and 10 Hz and/or 250°C and 63 Hz. The polycarbonate resin has a high shear viscosity of preferably 30 Pa·s to 260 Pa·s, more preferably 50 Pa-s to 260 Pa.s, and even more preferably 81.9 Pa.s

to 258 Pa.s.

According to an exemplary embodiment of the present specification, the polycarbonate resin has a high shear viscosity of 10 Pa·s to 260 Pa·s at 250°C and 10 Hz and 250°C and 63 Hz. The polycarbonate resin has a high shear viscosity of preferably 30 Pa·s to 260 Pa·s, more preferably 50 Pa·s to 260 Pa·s, and even more preferably 81.9 Pa·s to 258 Pa·s.

According to an exemplary embodiment of the present specification, the polycarbonate resin has a high shear viscosity of 10 Pa·s to 260 Pa·s at 250°C and 10 Hz or 250°C and 63 Hz. The polycarbonate resin has a high shear viscosity of preferably 30 Pa·s to 260 Pa·s, more preferably 50 Pa·s to 260 Pa·s, and even more preferably 81.9 Pa·s to 258 Pa·s.

According to an exemplary embodiment of the present specification, the polycarbonate resin has a melt index (MI) of 150 or less. The polycarbonate resin has a melt index (MI) of specifically 5 to 150. The polycarbonate resin has a melt index (MI) of more specifically 20 to 70 or 25 to 68. The above-described MI may be measured by a method used in the art, and specifically, the measurement is performed using a Melt indexer (Mi 2.2) manufactured by Goettfert Co., Ltd. A sample is dried in an oven at 120°C for 5 hours or more, the dried sample is put into a device and, melted for 5 minutes at a measurement temperature of 260°C, and then the weight of the sample passing through the nozzle for 5 seconds when applying pressure with a weight of 2.16 kg is measured and converted into a unit of g/10 min to calculate the Melt Index (MI melt index).

An exemplary embodiment of the present specification provides a polycarbonate resin including the first unit of Chemical Formula 1; the second unit of Chemical Formula 2; and the third unit of Chemical Formula 3.

According to an exemplary embodiment of the present specification, the polycarbonate resin includes a first unit of the following Chemical Formula 1; a second unit of the following Chemical Formula 2; and a third unit of the following Chemical Formula 3.

[Chemical Formula 1]

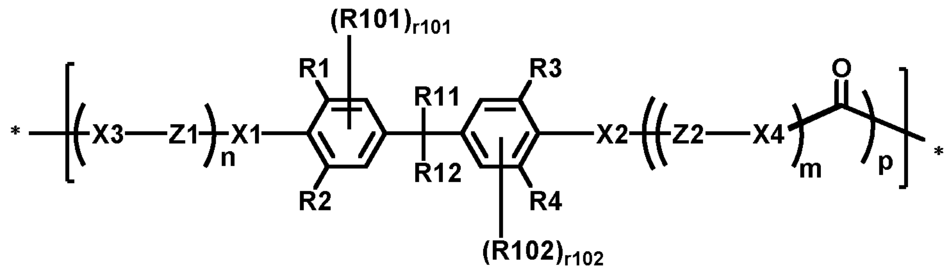

In Chemical Formula 1,

X1 to X4 are the same as or different from each other, and are each independently O or S,

R1 to R4 are the same as or different from each other, and are each independently hydrogen; a substituted or unsubstituted alkyl group; a substituted or unsubstituted cycloalkyl group; a substituted or unsubstituted aryl group; a fused ring group of a substituted or unsubstituted aromatic hydrocarbon ring and an aliphatic hydrocarbon ring; or a substituted or unsubstituted heteroaryl group,

Z1 and Z2 are the same as or different from each other, and are each independently a substituted or unsubstituted alkylene group; or a substituted or unsubstituted cycloalkylene group,

R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,

R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,

r101 is 1 or 2, and when r101 is 2, two R101's are the same as or different from each other,

r102 is 1 or 2, and when r102 is 2, two R102's are the same as or different from each other,

m and n are each an integer from 0 to 6,

p is an integer of 1 to 6,

when m, n and p are each 2 or higher, two or more structures in each parenthesis are the same as or different from each other, and

* means a moiety linked to the main chain of the resin,

[Chemical Formula 2]

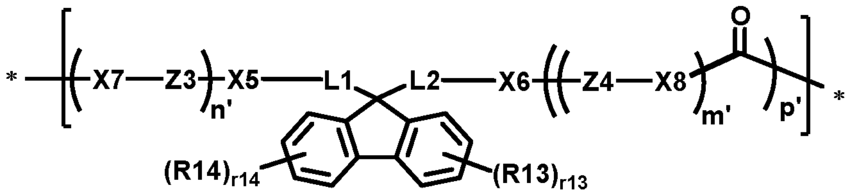

in Chemical Formula 2,

X5 to X8 are the same as or different from each other, and are each independently O or S,

L1 and L2 are the same as or different from each other, and are each independently a substituted or unsubstituted arylene group; or a substituted or unsubstituted heteroarylene group,

R13 and R14 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,

Z3 and Z4 are the same as or different from each other, and are each independently a substituted or unsubstituted alkylene group; or a substituted or unsubstituted cycloalkylene group,

m' and n' are each an integer from 0 to 6,

p' is an integer from 1 to 6,

r13 and r14 are each an integer from 1 to 4,

when r13, r14, m', n' and p' are each 2 or higher, two or more structures in each parenthesis are the same as or different from each other, and

* means a moiety linked to the main chain of the resin,

[Chemical Formula 3]

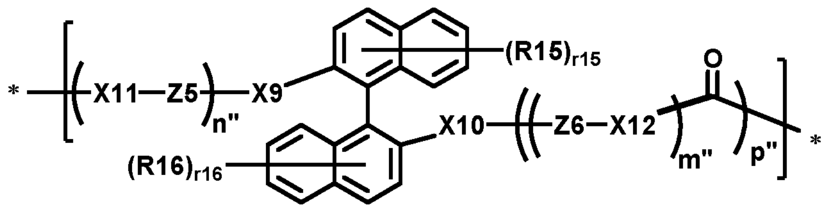

in Chemical Formula 3,

X9 to X12 are the same as or different from each other, and are each independently O or S,

Z5 and Z6 are the same as or different from each other, and are each independently a substituted or unsubstituted alkylene group; or a substituted or unsubstituted cycloalkylene group,

R15 and R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,

m" and n" are each an integer from 0 to 6,

p" is an integer from 1 to 6,

r15 and r16 are each an integer from 1 to 6,

when r15, r16, m", n" and p" are each 2 or higher, two or more structures in each parenthesis are the same as or different from each other, and

* means a moiety linked to the main chain of the resin.

When the polycarbonate resin includes the first unit of Chemical Formula 1, the polycarbonate resin includes a relatively small isopropylidene group compared to a large substituent such as fluorene, so that the probability of processing defects is reduced because the processability of the polycarbonate resin is excellent.

According to an exemplary embodiment of the present specification, the polycarbonate resin includes two or more second units of Chemical Formula 2.

According to an exemplary embodiment of the present specification, the polycarbonate resin includes two or

more of the second unit of Chemical Formula 2.

According to an exemplary embodiment of the present specification, the polycarbonate resin provides a polycarbonate resin including the first unit of Chemical Formula 1; two or more second units of Chemical Formula 2; and the third unit of Chemical Formula 3.

According to an exemplary embodiment of the present specification, in the polycarbonate resin, Chemical Formulae 2 and 3 may complement the glass transition temperature (Tg) of the first unit of Chemical Formula 1, or make the chain behavior of the first unit of Chemical Formula 1 flexible, and there are technical effects advantageous for the injection processing of molded articles.

In an exemplary embodiment of the present specification, the polycarbonate resin has a weight average molecular weight of 3,000g/mol to 500,000 g/mol, preferably 5,000 g/mol to 300,000 g/mol, 7,000 g/mol to 250,000 g/mol, 8,000 g/mol to 200,000 g/mol. The polycarbonate resin has a weight average molecular weight of more preferably 9,000 g/mol to 150,000 g/mol, 10,000 g/mol to 100,000 g/mol, 12,000 g/mol to 80,000 g/mol, and 13,000 g/mol to 60,000 g/mol.

In an exemplary embodiment of the present invention, the polycarbonate resin has a number average molecular weight of 2,000 g/mol to 300,000 g/mol, 3,000 g/mol to 200,000 g/mol, 4,000 g/mol to 150,000 g/mol, 4,500g/mol to 100,000 g/mol, preferably 5,000g/mol to 80,000 g/mol.

When the polycarbonate resin satisfies the above-described weight average molecular weight and number average molecular weight ranges, the polycarbonate resin may have optimum fluidity and processability.

In the present specification, the weight average molecular weights (Mws) of the polycarbonate resin and the oligomer used in the preparation thereof may be measured by gel permeation chromatography (GPC) using a polystyrene (PS) standard using Agilent 1200 series. Specifically, the weight average molecular weights may be measured using an Agilent 1200 series device using a Polymer Laboratories PLgel MIX-B 300 mm length column, and in this case, the measurement temperature is 40°C, the used solvent is tetrahydrofuran (THF), and the flow rate is 1 mL/min. The sample of the polycarbonate resin or oligomer is each prepared at a concentration of 10 mg/10 mL, and then fed in an amount of 10 μL, and the weight average molecular weight (Mw) value is induced using a calibration curve formed using a polystyrene standard. In this case, nine types of polystyrene standard products with a molecular weight (g/mol) of 2,000 / 10,000 / 30,000 / 70,000 / 200,000 / 700,000 / 2,000,000 / 4,000,000 / 10,000,000 are used.

According to an exemplary embodiment of the present specification, a refractive index of the polycarbonate resin is 1.6 to 1.8 at 587 nm. The refractive index may be preferably 1.6 to 1.75, and more preferably 1.6 to 1.72. When the resin satisfies the above refractive index, a thin and light optical lens can be manufactured when the resin is applied to a molded article such as an optical lens.

In an exemplary embodiment of the present specification, the Abbe's Number of the polycarbonate resin, which is measured and calculated at a wavelength of 486, 587, and 656 nm may be 5 to 45. Preferably, the Abbe's Number may be 10 to 25.

When the polycarbonate resin satisfies the above Abbe's Number range, there is an effect that the dispersion is decreased and the sharpness is increased when the resin is applied to a molded article such as an optical lens.

The Abbe's Number may specifically be obtained by the following Equation by measuring the refractive index ($n_D$, $n_F$, and $n_C$) at a wavelength of D (587 nm), F (486 nm), and C (656 nm), respectively at 20°C.

$$\text{Abbe's Number} = (n_D - 1)/(n_F - n_C)$$

The refractive index and the Abbe's Number may be measured from a film prepared by applying a solution prepared by dissolving the resin in a solvent to a silicon wafer by spin-coating, and may be measured by obtaining the result value according to the wavelength of light using an ellipsometer at 20°C for the applied film. The solution may be applied by the spin-coating at a rotation speed of 150 rpm to 300 rpm, and the applied film may have a thickness of 5 um to 20 um. The silicon wafer is not particularly limited, and any silicon wafer that can measure the refractive index and the Abbe's Number of the resin composition according to the present specification may be appropriately adopted. The solvent may be dimethylacetamide or 1,2-dichlorobenzene, and the solution may be prepared by dissolving the resin sample in an amount of 10 wt% based on the total weight of the solution.

In an exemplary embodiment of the present specification, the polycarbonate resin may have a glass transition temperature (Tg) of 90°C to 200°C. The glass transition temperature may be preferably, 100°C to 190°C, 120°C to 170°C, and 130°C to 160°C.

When the polycarbonate resin satisfies the above glass transition temperature range, the glass transition temperature is easily adjusted when a polycarbonate resin composition is prepared by mixing with a resin having excellent heat resistance and injectability and having a glass transition temperature different from the above-described range, so that the physical properties desired in the present specification may be satisfied.

The glass transition temperature (Tg) may be measured by a differential scanning calorimeter (DSC). Specifically, the glass transition temperature may be measured from a graph obtained by heating 5.5 mg to 8.5 mg of the

polycarbonate resin sample to 270°C under a nitrogen atmosphere, and then scanning the resin sample while heating the resin sample at a heating rate of 10°C/min during the second heating after cooling.

According to an exemplary embodiment of the present specification, Chemical Formula 2 is the following Chemical Formula 2-1 or 2-2.

According to an exemplary embodiment of the present specification, Chemical Formula 2 is any one or more of the following Chemical Formulae 2-1 and 2-2.

[Chemical Formula 2-1]

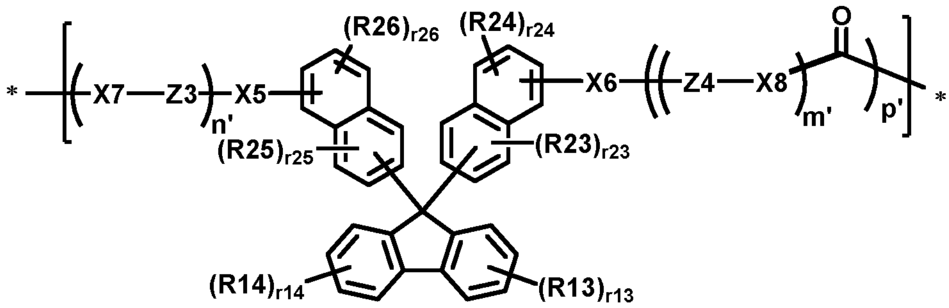

[Chemical Formula 2-2]

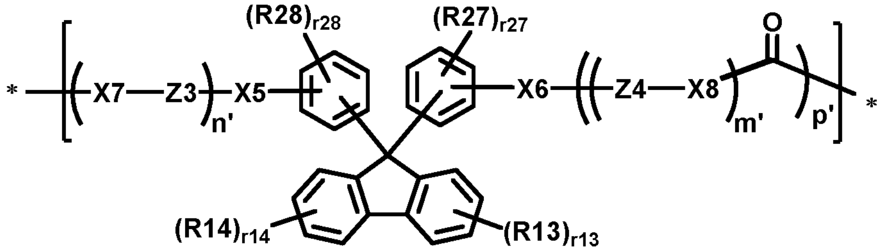

In Chemical Formulae 2-1 and 2-2,

the definitions of *, X5 to X8, Z3, Z4, R13, r13, R14, r14, n', m' and p' are the same as those defined in Chemical Formula 2,
R23 to R28 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r23 to r26 are each an integer from 1 to 3,
r27 and r28 are each an integer from 1 to 4, and
when r23 to r28 are each 2 or higher, two or more structures in each parenthesis are the same as or different from each other.

According to an exemplary embodiment of the present specification, the polycarbonate resin includes two or more second units of Chemical Formula 2.

According to an exemplary embodiment of the present specification, the second unit includes Chemical Formula 2-1 or 2-2.

According to an exemplary embodiment of the present specification, the second unit includes Chemical Formulae 2-1 and 2-2.

According to an exemplary embodiment of the present specification, the polycarbonate resin includes the first unit of Chemical Formula 1; the second unit of Chemical Formula 2-1; and the third unit of Chemical Formula 3.

According to an exemplary embodiment of the present specification, the polycarbonate resin includes the first unit of Chemical Formula 1; the second unit of Chemical Formula 2-2; and the third unit of Chemical Formula 3.

According to an exemplary embodiment of the present specification, the polycarbonate resin includes the first unit of Chemical Formula 1; the second units of Chemical Formulae 2-1 and 2-2; and the third unit of Chemical Formula 3.

According to an exemplary embodiment of the present specification, provided is a polycarbonate resin including

the first unit of Chemical Formula 1; the second unit of Chemical Formula 2-1; and the third unit of Chemical Formula 3.

According to an exemplary embodiment of the present specification, provided is a polycarbonate resin including the first unit of Chemical Formula 1; the second unit of Chemical Formula 2-2; and the third unit of Chemical Formula 3.

An exemplary embodiment of the present specification provides a polycarbonate resin including the first unit of Chemical Formula 1; the second units of Chemical Formulae 2-1 and 2-2; and the third unit of Chemical Formula 3.

Examples of the substituents in the present specification will be described below, but are not limited thereto.

In the present specification,

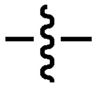

means a moiety to be linked.

The term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present specification, the term "substituted or unsubstituted" means being substituted with one or more substituents selected from the group consisting of deuterium; a halogen group; a hydroxyl group; a cyano group; an alkyl group; a cycloalkyl group; an alkoxy group; an alkenyl group; an aryloxy group; an arylthio group; alkylthio group; a silyl group; an aryl group; and a heteroaryl group, being substituted with a substituent to which two or more substituents among the exemplified substituents are linked, or having no substituent.

In the present specification, the fact that two or more substituents are linked indicates that hydrogen of any one substituent is linked to another substituent. For example, when two substituents are linked to each other, a phenyl group and a naphthyl group may be linked to each other to become a substituent of

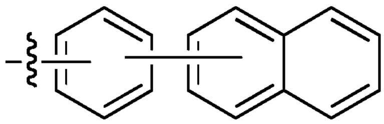

or

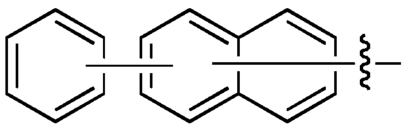

Further, the case where three substituents are linked to one another includes not only a case where (Substituent 1)-(Substituent 2)-(Substituent 3) are consecutively linked to one another, but also a case where (Substituent 2) and (Substituent 3) are linked to (Substituent 1). For example, a phenyl group, a naphthyl group , and an isopropyl group may be linked to one another to become a substituent of

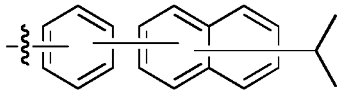

,

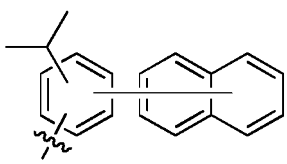

, or

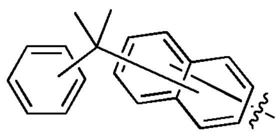

.

The above-described definition also applies equally to the case where four or more substituents are linked to one another.

In the present specification, examples of a halogen group include fluorine, chlorine, bromine or iodine.

In the present specification, the alkyl group may be straight-chained or branched, and the number of carbon atoms thereof is not particularly limited, but is preferably 1 to 30. Specific examples thereof include methyl, ethyl, propyl, n-propyl, isopropyl, butyl, n-butyl, isobutyl, tert-butyl, sec-butyl, 1-methyl-butyl, 1-ethylbutyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethyl-propyl, isohexyl, 4-methylhexyl, 5-methylhexyl, and the like, but are not limited thereto.

In the present specification, a cycloalkyl group is not particularly limited, but has preferably 3 to 30 carbon atoms, and specific examples thereof include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, an adamantyl group, and the like, but are not limited thereto.

In the present specification, the alkoxy group may be straight-chained, branched, or cyclic. The number of carbon atoms of the alkoxy group is not particularly limited, but is preferably 1 to 30. Specific examples thereof include methoxy, ethoxy, n-propoxy, isopropoxy, n-butoxy, isobutoxy, tert-butoxy, sec-butoxy, n-pentyloxy, neopentyloxy, isopentyloxy, n-hexyloxy, 3,3-dimethylbutyloxy, 2-ethylbutyloxy, n-octyloxy, n-nonyloxy, n-decyloxy, benzyloxy, p-methylbenzyloxy, and the like, but are not limited thereto.

In the present specification, the alkenyl group may be straight-chained or branched, and the number of carbon atoms thereof is not particularly limited, but is preferably 2 to 30. Specific examples thereof include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a stilbenyl group, a styrenyl group, and the like, but are not limited thereto.

In the present specification, an aryl group is not particularly limited, but has preferably 6 to 50 carbon atoms, and the aryl group may be monocyclic or polycyclic.

When the aryl group is a monocyclic aryl group, the number of carbon atoms is not particularly limited, but is preferably 6 to 30. Specific examples of the monocyclic aryl group include a phenyl group, a biphenyl group, a terphenyl group, and the like, but are not limited thereto.

When the aryl group is a polycyclic aryl group, the number of carbon atoms thereof is not particularly limited, but is preferably 10 to 50. Specific examples of the polycyclic aryl group include a naphthyl group, an anthracene group, a phenanthrene group, a triphenylene group, a pyrene group, a phenalene group, a perylene group, a chrysene group, a fluorene group, and the like, but are not limited thereto.

In the present specification, the fluorene group may be substituted, and adjacent groups may be bonded to each other to form a ring.

Examples of the fluorene group include

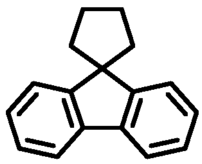,

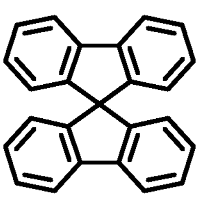, 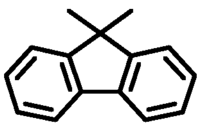, 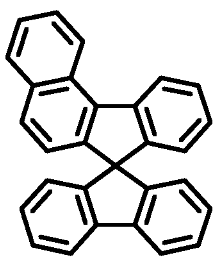, 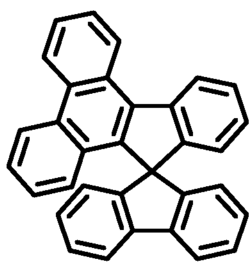,

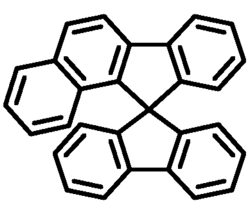, 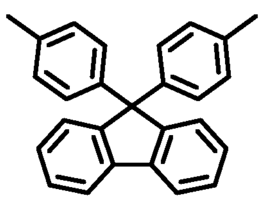, 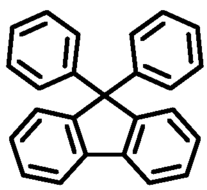,

and the like, but are not limited thereto.

In the present specification, an "adjacent" group may mean a substituent substituting an atom directly linked to an atom substituted by the corresponding substituent, a substituent sterically most closely positioned to the corresponding substituent, or another substituent substituting an atom substituted by the corresponding substituent. For example, two substituents substituting ortho positions in a benzene ring, and two substituents substituting the same carbon in an aliphatic ring may be interpreted as groups "adjacent" to each other.

In the present specification, a heteroaryl group includes one or more atoms other than carbon, that is, one or more heteroatoms, and specifically, the heteroatom may include one or more atoms selected from the group consisting of O, N, Se, S, and the like. The number of carbon atoms thereof is not particularly limited, but is preferably 2 to 30, and the heteroaryl group may be monocyclic or polycyclic. Examples of the heteroaryl group include a thiophene group, a furan group, a pyrrole group, an imidazole group, a thiazole group, an oxazole group, an oxadiazole group, a pyridine group, a bipyridine group, a pyrimidine group, a triazine group, a triazole group, an acridine group, a pyridazine group, a pyrazine group, a quinoline group, a quinazoline group, a quinoxaline group, a phthalazine group, a pyridopyrimidine group, a pyridopyrazine group, a pyrazinopyrazine group, an isoquinoline group, an indole group, a carbazole group, a benzoxazole group, a benzimidazole group, a benzothiazole group, a benzocarbazole group, a benzothiophene group, a dibenzothiophene group, a benzofuran group, a phenanthridine group, a phenanthroline group, an isoxazole group, a thiadiazole group, a dibenzofuran group, a dibenzosilole group, a phenoxathiin group, a phenoxazine group, a phenothiazine group, a dihydroindenocarbazole group, a spirofluorenexanthene group, a spirofluorenethioxanthene group, a tetrahydronaphthothiophene group, a tetrahydronaphthofuran group, a tetrahydrobenzothiophene group, a tetrahydrobenzofuran group, and the like, but are not limited thereto.

In the present specification, the silyl group may be an alkylsilyl group, an arylsilyl group, an alkylarylsilyl group, a heteroarylsilyl group, and the like. The above-described examples of the alkyl group may be applied to the alkyl group in the alkylsilyl group, the above-described examples of the aryl group may be applied to the aryl group in the arylsilyl group, the examples of the alkyl group and the aryl group may be applied to the alkyl group and the aryl group in the alkylarylsilyl group, and the examples of the heteroaryl group may be applied to the heteroaryl group in the heteroarylsilyl group.

In the present specification, the aryloxy group may be represented by -ORo, and the description on the above-described aryl group is applied to Ro.

In the present specification, the arylthio group may be represented by -SRs1, and the description on the above-described aryl group is applied to Rs1.

In the present specification, the alkylthio group may be represented by -SRs2, and the description on the above-described alkyl group is applied to Rs2.

In the present specification, an alkylene group means a group having two bonding positions in an alkyl group, that is, a divalent group. The above-described description on the alkyl group may be applied to the alkylene group, except for a divalent alkylene group.

In the present specification, the cycloalkylene group means a group having two bonding positions in a cycloalkyl group, that is, a divalent group. The above-described description on the cycloalkyl group may be applied to the cycloalkylene groups, except for a divalent cycloalkylene group.

An exemplary embodiment of the present specification provides a method for preparing the polycarbonate resin, the method including: polymerizing a composition for preparing a polycarbonate resin, including: a compound of the following Chemical Formula 1a; a compound of the following Chemical Formula 2a; a compound of the following Chemical Formula 3a; and a polycarbonate precursor in which a high shear viscosity of the polycarbonate resin is 10 Pa-s to 260 Pa.s at 250°C.

[Chemical Formula 1a]

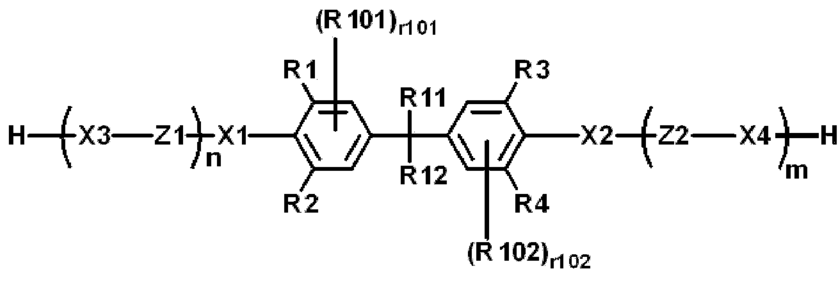

In Chemical Formula 1a,

X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a fused ring group of a substituted or unsubstituted aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6, and
when m and n are each 2 or higher, two or more structures in each parenthesis are the same as or different from each other,

[Chemical Formula 2a]

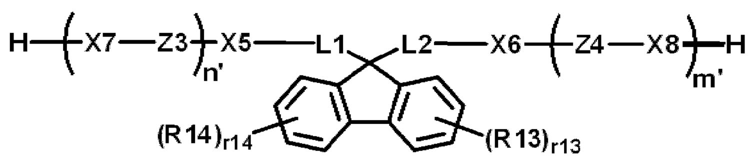

[Chemical Formula 3a]

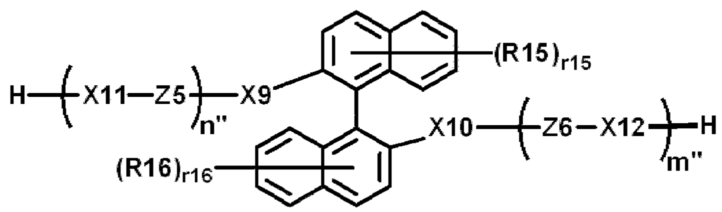

in Chemical Formulae 2a and 3a,
X5 to X12 are the same as or different from each other, and are each independently O or S,
L1 and L2 are the same as or different from each other, and are each independently a substituted or unsubstituted arylene group; or a substituted or unsubstituted heteroarylene group,
Z3 to Z6 are the same as or different from each other, and are each independently a substituted or unsubstituted alkylene group; or a substituted or unsubstituted cycloalkylene group,
R13 to R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
r13 and r14 are each an integer from 1 to 4,
r15 and r16 are each an integer from 1 to 6,
m', m", n' and n" are each an integer from 0 to 6, and

when r13 to r16, m', m", n' and n" are each 2 or higher, two or more structures in each parenthesis are the same as or different from each other.

According to an exemplary embodiment of the present specification, Chemical Formula 2a is the following Chemical Formula 2a-1 or 2a-2.

According to an exemplary embodiment of the present specification, Chemical Formula 2a is any one or more

of the following Chemical Formulae 2a-1 and 2a-2.

[Chemical Formula 2a-1]

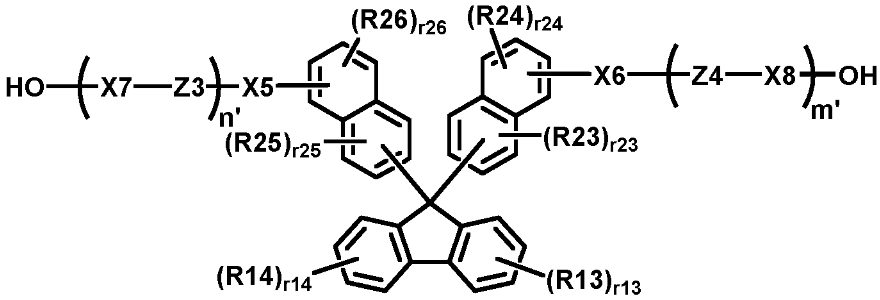

[Chemical Formula 2a-2]

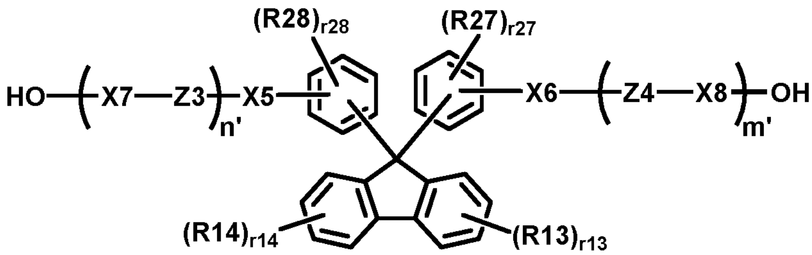

In Chemical Formulae 2a-1 and 2a-2,

the definitions of X5 to X8, Z3, Z4, R13, r13, R14, r14, n' and m' are the same as those defined in Chemical Formula 2, R23 to R28 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r23 to r26 are each an integer from 1 to 3,
r27 and r28 are each an integer from 1 to 4, and
when r23 to r28 are each 2 or higher, two or more structures in each parenthesis are the same as or different from each other.

An exemplary embodiment of the present specification provides a method for preparing the polycarbonate resin, the method including: polymerizing a composition for preparing a polycarbonate resin, including: the compound of Chemical Formula 1a; the compound of the Chemical Formula 2a-1; the compound of Chemical Formula 3a; and a polycarbonate precursor in which a high shear viscosity of the polycarbonate resin is 10 Pa·s to 260 Pa·s at 250°C.
An exemplary embodiment of the present specification provides a method for preparing the polycarbonate resin, the method including: polymerizing a composition for preparing a polycarbonate resin, including: the compound of Chemical Formula 1a; the compound of the Chemical Formula 2a-2; the compound of Chemical Formula 3a; and a polycarbonate precursor in which a high shear viscosity of the polycarbonate resin is 10 Pa·s to 260 Pa·s at 250°C.
An exemplary embodiment of the present specification provides a method for preparing the polycarbonate resin, the method including: polymerizing a composition for preparing a polycarbonate resin, including: the compound of Chemical Formula 1a; the compound of the Chemical Formula 2a-1; the compound of Chemical Formula 2a-2; the compound of Chemical Formula 3a; and a polycarbonate precursor in which a high shear viscosity of the polycarbonate resin is 10 Pa-s to 260 Pa.s at 250°C.
An exemplary embodiment of the present invention provides a method for preparing a polycarbonate resin, the method including: polymerizing a composition for preparing the polycarbonate resin, which includes the compound of Chemical Formula 1a; the compound of Chemical Formula 2a; the compound of Chemical Formula 3a; and a polycarbonate precursor.
An exemplary embodiment of the present invention provides a method for preparing a polycarbonate resin, the method including: polymerizing a composition for preparing the polycarbonate resin, which includes the compound of

Chemical Formula 1a; the compound of Chemical Formula 2a-1; the compound of Chemical Formula 3a; and a polycarbonate precursor.

An exemplary embodiment of the present invention provides a method for preparing a polycarbonate resin, the method including: polymerizing a composition for preparing the polycarbonate resin, which includes the compound of Chemical Formula 1a; the compound of Chemical Formula 2a-2; the compound of Chemical Formula 3a; and a polycarbonate precursor.

An exemplary embodiment of the present invention provides a method for preparing a polycarbonate resin, the method including: polymerizing a composition for preparing the polycarbonate resin, which includes the compound of Chemical Formula 1a; the compound of Chemical Formula 2a-1; the compound of Chemical Formula 2a-2; the compound of Chemical Formula 3a; and a polycarbonate precursor.

According to an exemplary embodiment of the present specification, X1 is O.

According to an exemplary embodiment of the present specification, X2 is O.

According to an exemplary embodiment of the present specification, X3 is O.

According to an exemplary embodiment of the present specification, X4 is O.

According to an exemplary embodiment of the present specification, X5 is O.

According to an exemplary embodiment of the present specification, X6 is O.

According to an exemplary embodiment of the present specification, X7 is O.

According to an exemplary embodiment of the present specification, X8 is O.

According to an exemplary embodiment of the present specification, X9 is O.

According to an exemplary embodiment of the present specification, X10 is O.

According to an exemplary embodiment of the present specification, X11 is O.

According to an exemplary embodiment of the present specification, X12 is O.

According to an exemplary embodiment of the present specification, X1 is S.

According to an exemplary embodiment of the present specification, X2 is S.

According to an exemplary embodiment of the present specification, X3 is S.

According to an exemplary embodiment of the present specification, X4 is S.

According to an exemplary embodiment of the present specification, X5 is S.

According to an exemplary embodiment of the present specification, X6 is S.

According to an exemplary embodiment of the present specification, X7 is S.

According to an exemplary embodiment of the present specification, X8 is S.

According to an exemplary embodiment of the present specification, X9 is S.

According to an exemplary embodiment of the present specification, X10 is S.

According to an exemplary embodiment of the present specification, X11 is S.

According to an exemplary embodiment of the present specification, X12 is S.

According to an exemplary embodiment of the present specification, Z1 and Z2 are the same as or different from each other, and are each independently a straight-chained or branched alkylene group having 1 to 30 carbon atoms.

According to an exemplary embodiment of the present specification, Z1 and Z2 are the same as or different from each other, and are each independently a straight-chained or branched alkylene group having 1 to 20 carbon atoms.

According to an exemplary embodiment of the present specification, Z1 and Z2 are the same as or different from each other, and are each independently a straight-chained or branched alkylene group having 1 to 10 carbon atoms.

According to an exemplary embodiment of the present specification, Z1 and Z12 are an ethylene group.

According to an exemplary embodiment of the present specification, Z3 and Z4 are the same as or different from each other, and are each independently a straight-chained or branched alkylene group having 1 to 30 carbon atoms.

According to an exemplary embodiment of the present specification, Z3 and Z4 are the same as or different from each other, and are each independently a straight-chained or branched alkylene group having 1 to 20 carbon atoms.

According to an exemplary embodiment of the present specification, Z3 and Z4 are the same as or different from each other, and are each independently a straight-chained or branched alkylene group having 1 to 10 carbon atoms.

According to an exemplary embodiment of the present specification, Z3 and Z4 are an ethylene group.

According to an exemplary embodiment of the present specification, Z5 and Z6 are the same as or different from each other, and are each independently a straight-chained or branched alkylene group having 1 to 30 carbon atoms.

According to an exemplary embodiment of the present specification, Z5 and Z6 are the same as or different from each other, and are each independently a straight-chained or branched alkylene group having 1 to 20 carbon atoms.

According to an exemplary embodiment of the present specification, Z5 and Z6 are the same as or different from each other, and are each independently a straight-chained or branched alkylene group having 1 to 10 carbon atoms.

According to an exemplary embodiment of the present specification, Z5 and Z6 are an ethylene group.

According to an exemplary embodiment of the present specification, L1 and L2 are the same as or different from each other, and are each independently a monocyclic or polycyclic arylene group having 6 to 30 carbon atoms, which is unsubstituted or substituted with a straight-chained or branched alkyl group having 1 to 30 carbon atoms, or a

monocyclic or polycyclic aryl group having 6 to 30 carbon atoms.

According to an exemplary embodiment of the present specification, L1 and L2 are the same as or different from each other, and are each independently a monocyclic or polycyclic arylene group having 6 to 20 carbon atoms, which is unsubstituted or substituted with a straight-chained or branched alkyl group having 1 to 20 carbon atoms, or a monocyclic or polycyclic aryl group having 6 to 20 carbon atoms.

According to an exemplary embodiment of the present specification, L1 and L2 are the same as or different from each other, and are each independently a phenylene group which is unsubstituted or substituted with a methyl group, a phenyl group, or a naphthyl group; or a divalent naphthyl group.

According to an exemplary embodiment of the present specification, R23 to R26 are hydrogen.

According to an exemplary embodiment of the present specification, R27 and R28 are the same as or different from each other, and are each independently hydrogen; a substituted or unsubstituted alkyl group having 1 to 30 carbon atoms; or a substituted or unsubstituted monocyclic or polycyclic aryl group having 6 to 30 carbon atoms.

According to an exemplary embodiment of the present specification, R27 and R28 are the same as or different from each other, and are each independently hydrogen; a substituted or unsubstituted alkyl group having 1 to 20 carbon atoms; or a substituted or unsubstituted monocyclic or polycyclic aryl group having 6 to 20 carbon atoms.

According to an exemplary embodiment of the present specification, R27 and R28 are the same as or different from each other, and are each independently hydrogen; an alkyl group having 1 to 30 carbon atoms; or a monocyclic or polycyclic aryl group having 6 to 30 carbon atoms.

According to an exemplary embodiment of the present specification, R27 and R28 are the same as or different from each other, and are each independently hydrogen; an alkyl group having 1 to 20 carbon atoms; or a monocyclic or polycyclic aryl group having 6 to 20 carbon atoms.

According to an exemplary embodiment of the present specification, R27 and R28 are the same as or different from each other, and are each independently hydrogen; a methyl group; a phenyl group; or a naphthyl group.

According to an exemplary embodiment of the present specification, R1 to R4 are the same as or different from each other, and are each independently hydrogen; a monocyclic or polycyclic aryl group having 6 to 30 carbon atoms, which is unsubstituted or substituted with a cyano group, a straight-chained or branched alkyl group having 1 to 30 carbon atoms, a straight-chained or branched alkenyl group having 2 to 30 carbon atoms, or a monocyclic or polycyclic heterocyclic group having 2 to 30 carbon atoms; a fused ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms.

According to an exemplary embodiment of the present specification, R1 to R4 are the same as or different from each other, and are each independently hydrogen; a monocyclic or polycyclic aryl group having 6 to 20 carbon atoms, which is unsubstituted or substituted with a cyano group, a straight-chained or branched alkyl group having 1 to 20 carbon atoms, a straight-chained or branched alkenyl group having 2 to 20 carbon atoms, or a monocyclic or polycyclic heterocyclic group having 2 to 20 carbon atoms; a fused ring group of a monocyclic or polycyclic aromatic hydrocarbon ring having 6 to 20 carbon atoms and a monocyclic or polycyclic aliphatic hydrocarbon ring having 3 to 20 carbon atoms; or a polycyclic heteroaryl group having 6 to 20 carbon atoms.

According to an exemplary embodiment of the present specification, R1 to R4 are the same as or different from each other, and are each independently hydrogen; a phenyl group which is unsubstituted or substituted with a cyano group or a methyl group; a naphthyl group which is unsubstituted or substituted with a cyano group; a dihydroindene group; or a quinoline group.

According to an exemplary embodiment of the present specification, R11 and R12 are the same as or different from each other, and are each independently a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms; or a monocyclic or polycyclic heteroaryl group having 2 to 30 carbon atoms, or are bonded to each other to form a monocyclic or polycyclic aliphatic hydrocarbon ring having 6 to 30 carbon atoms, which is unsubstituted or substituted with a straight-chained or branched alkyl group having 1 to 30 carbon atoms.

According to an exemplary embodiment of the present specification, R11 and R12 are the same as or different from each other, and are each independently a straight-chained or branched alkyl group having 1 to 20 carbon atoms; a monocyclic or polycyclic cycloalkyl group having 6 to 20 carbon atoms; a monocyclic or polycyclic aryl group having 6 to 20 carbon atoms; or a monocyclic or polycyclic heteroaryl group having 2 to 20 carbon atoms, or are bonded to each other to form a monocyclic or polycyclic aliphatic hydrocarbon ring having 6 to 20 carbon atoms, which is unsubstituted or substituted with a straight-chained or branched alkyl group having 1 to 20 carbon atoms.

According to an exemplary embodiment of the present specification, R11 and R12 are the same as or different from each other, and each independently a methyl group; or a phenyl group, or are bonded to each other to form a cyclohexane which is unsubstituted or substituted with a methyl group; or a cyclododecane.

According to an exemplary embodiment of the present specification, R13 and R14 are the same as or different from each other, and are each independently hydrogen; or an aryl group having 6 to 30 carbon atoms, or are bonded

to an adjacent group to form a monocyclic or polycyclic aromatic hydrocarbon ring having 6 to 30 carbon atoms.

According to an exemplary embodiment of the present specification, R13 and R14 are the same as or different from each other, and are each independently hydrogen; or an aryl group having 6 to 20 carbon atoms, or are bonded to an adjacent group to form a monocyclic or polycyclic aromatic hydrocarbon ring having 6 to 20 carbon atoms.

According to an exemplary embodiment of the present specification, R13 and R14 are the same as or different from each other, and are each independently hydrogen; a phenyl group; or a naphthyl group, or are bonded to an adjacent group to form a benzene.

According to an exemplary embodiment of the present specification, R15 and R16 are the same as or different from each other, and are each independently hydrogen; or an aryl group having 6 to 30 carbon atoms.

According to an exemplary embodiment of the present specification, R15 and R16 are the same as or different from each other, and are each independently hydrogen; or an aryl group having 6 to 20 carbon atoms.

According to an exemplary embodiment of the present specification, R15 and R16 are the same as or different from each other, and are each independently hydrogen; a phenyl group; or a naphthyl group.

According to an exemplary embodiment of the present specification, Chemical Formula 1a is any one of the following compounds.

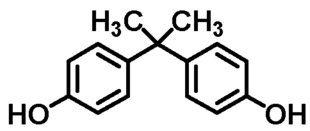
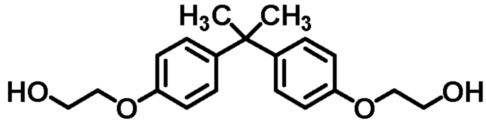

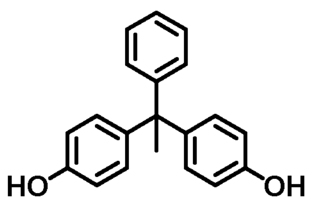
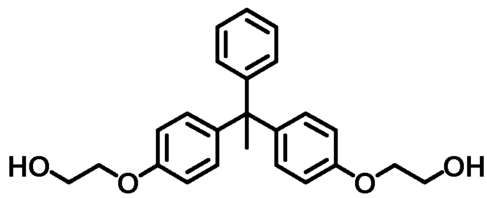

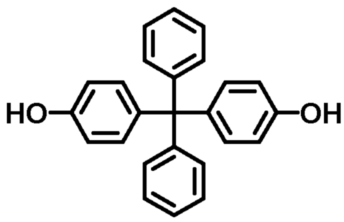
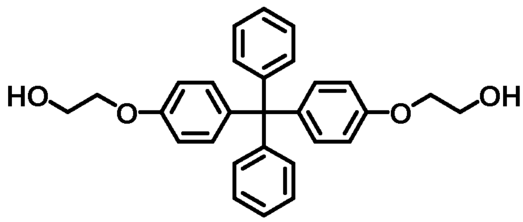

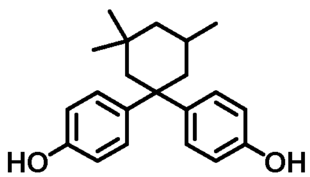
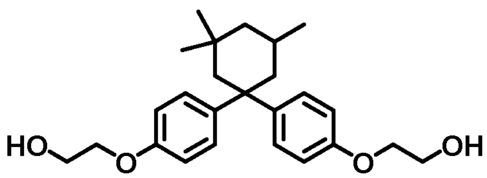

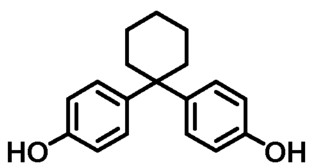
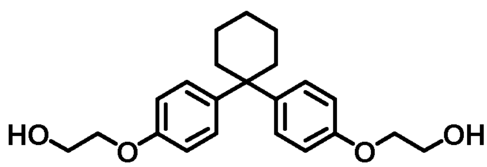

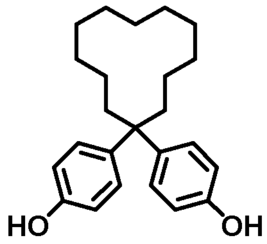

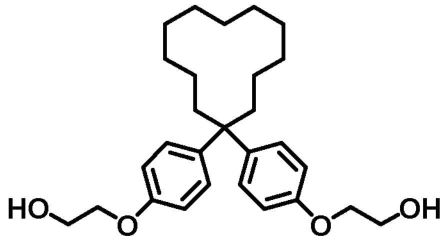

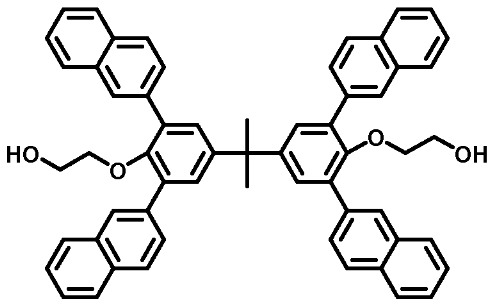

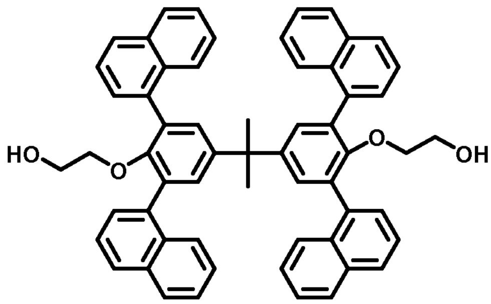

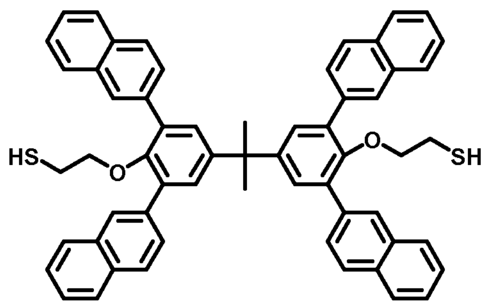

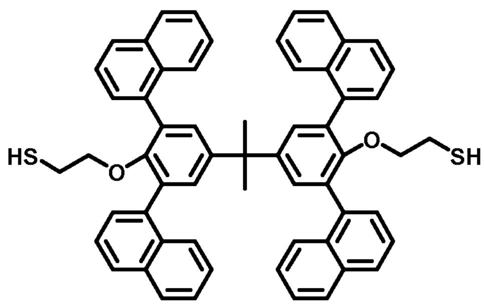

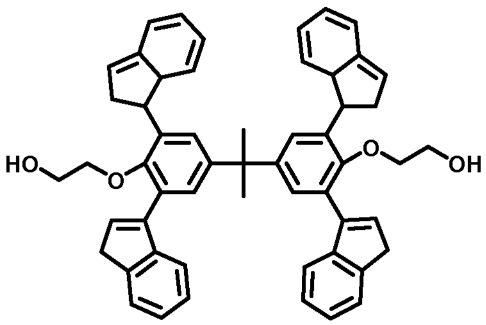

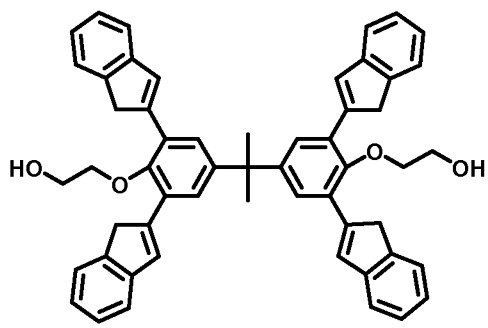

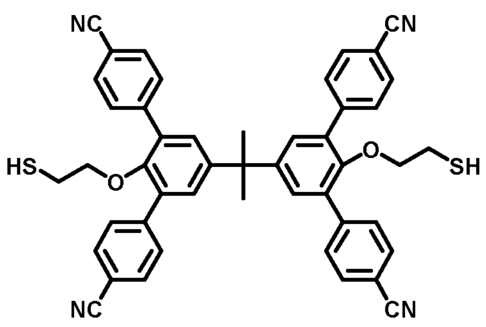

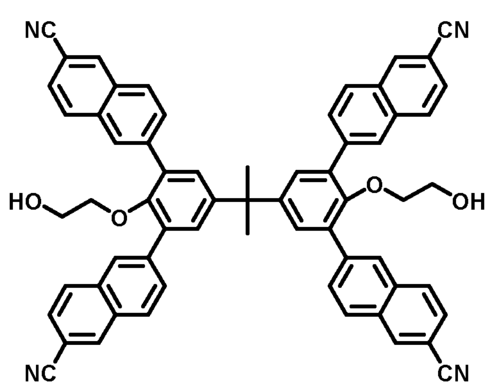

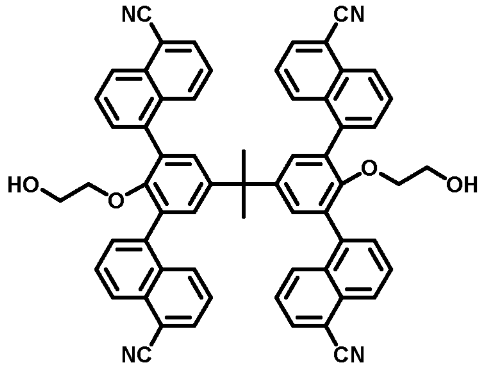 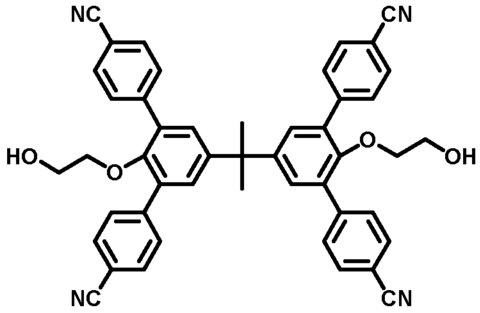

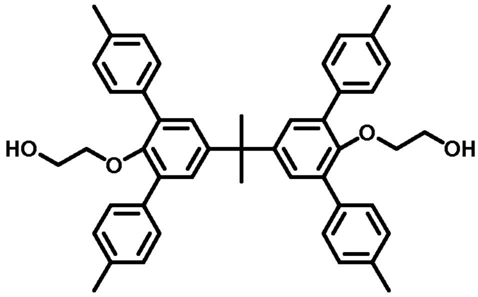 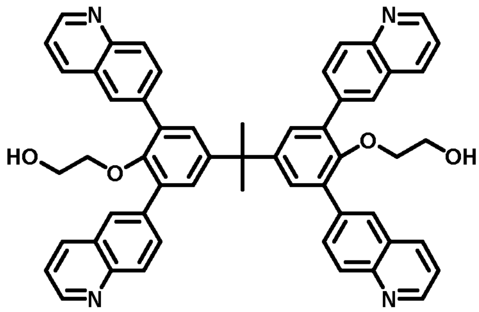

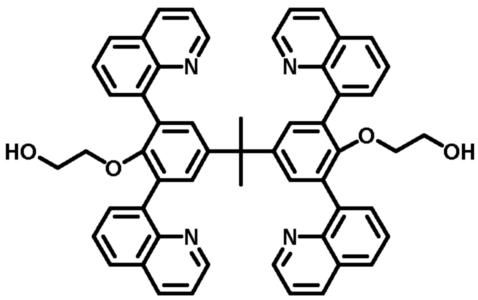 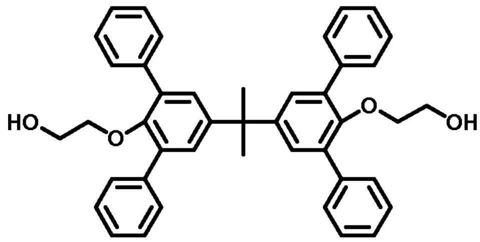

According to an exemplary embodiment of the present specification, Chemical Formula 2a is any one of the following compounds.

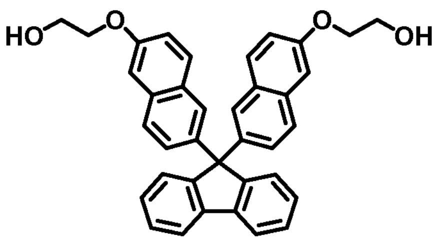 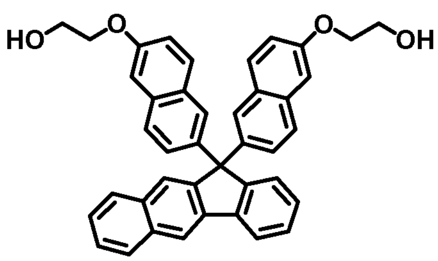

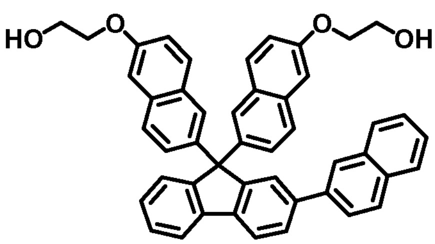 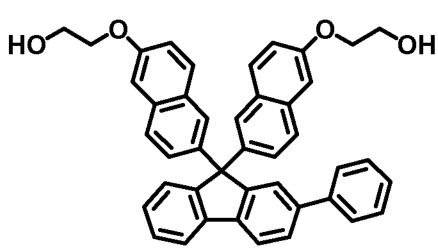

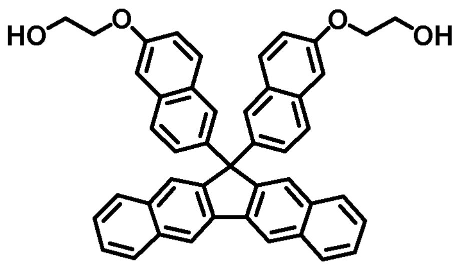

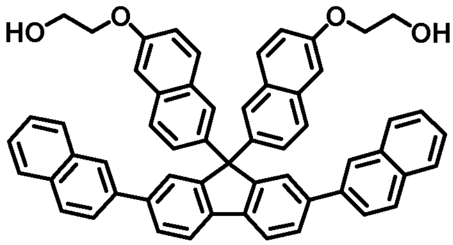

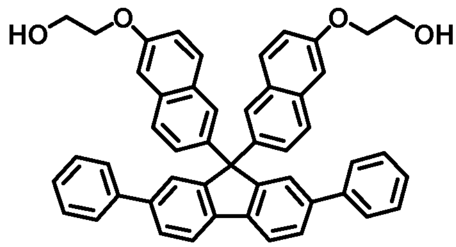

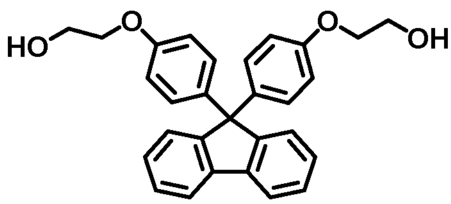

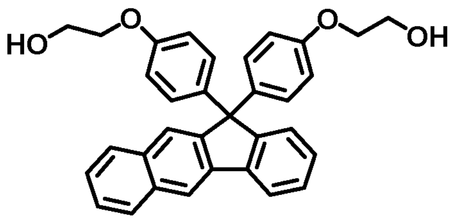

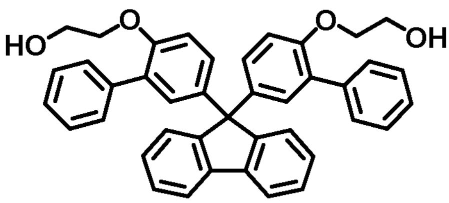

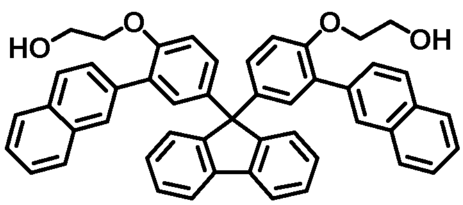

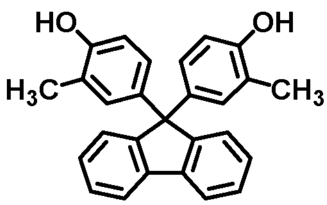

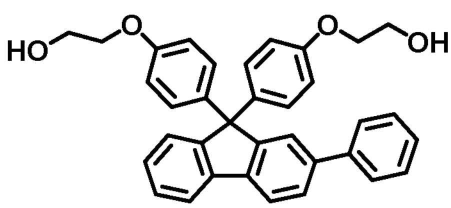

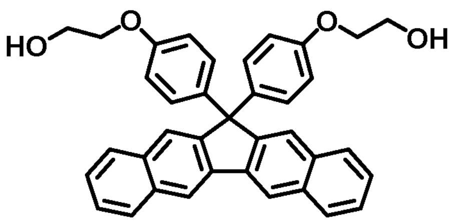

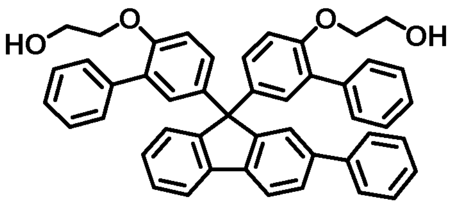 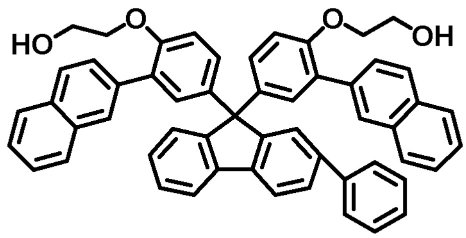

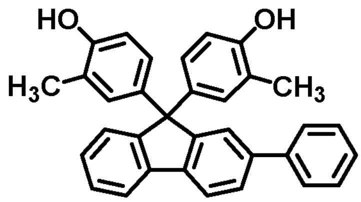 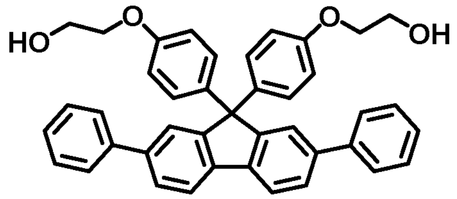

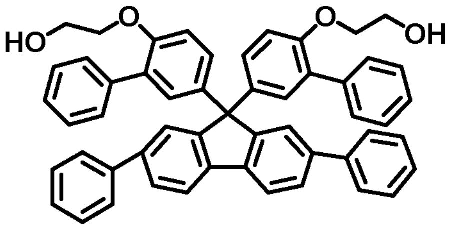 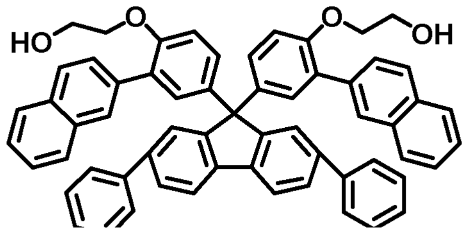

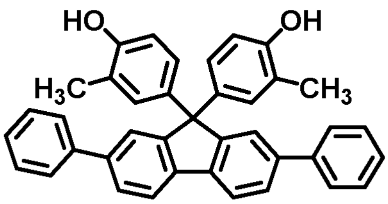

According to an exemplary embodiment of the present specification, Chemical Formula 2a-1 is any one of the following compounds.

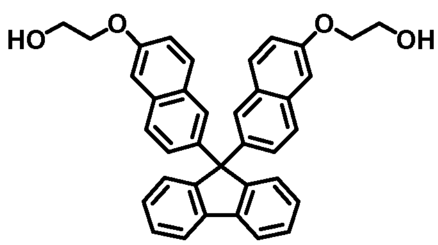 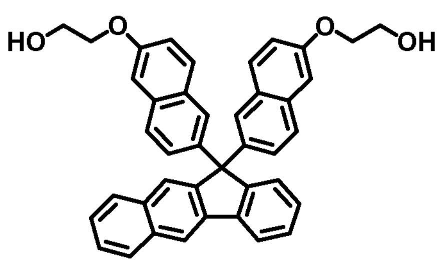

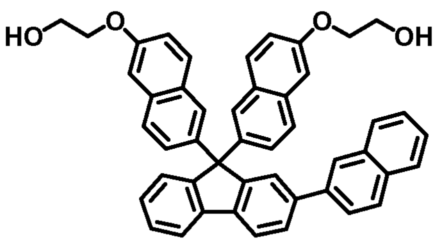 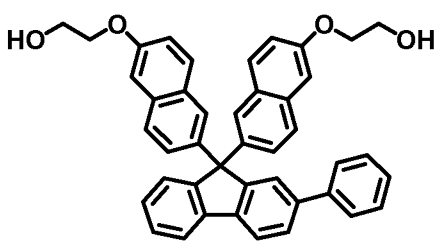

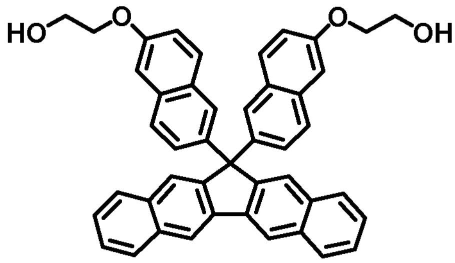

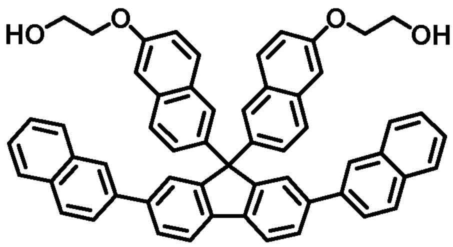

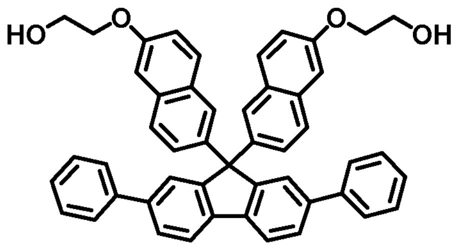

According to an exemplary embodiment of the present specification, Chemical Formula 2a-2 is any one of the following compounds.

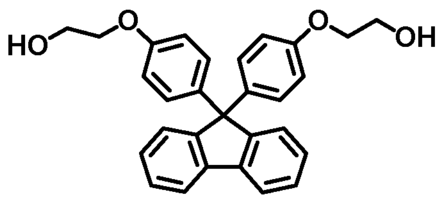

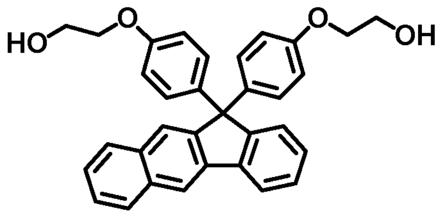

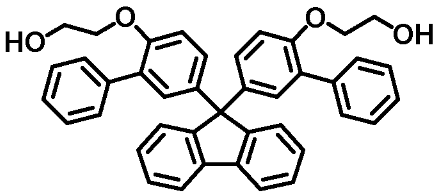

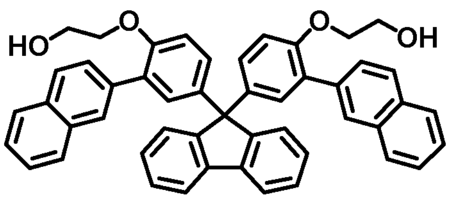

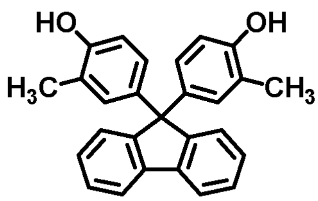

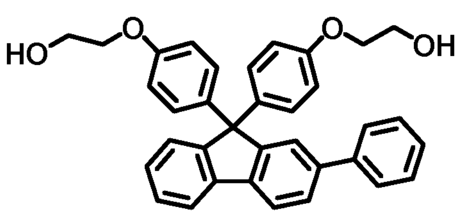

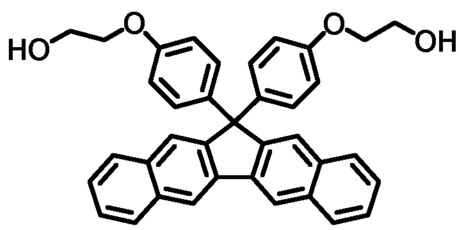

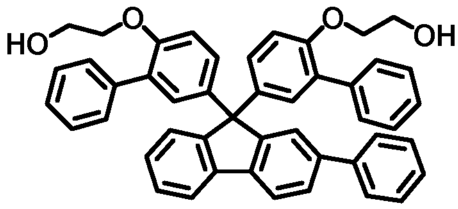

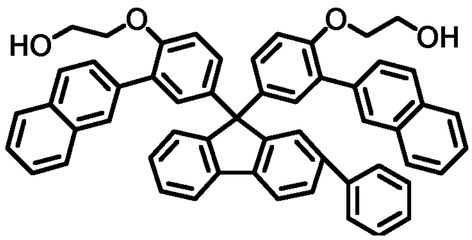

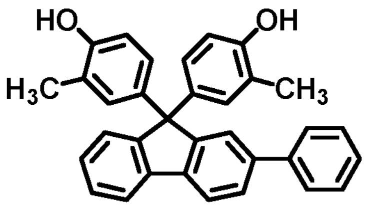

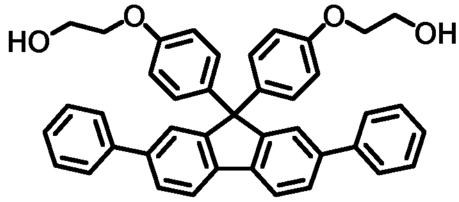

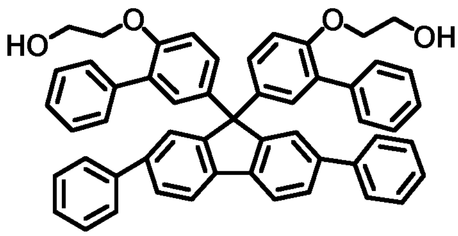

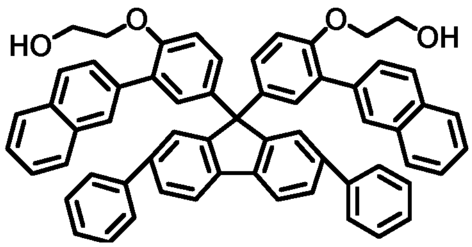

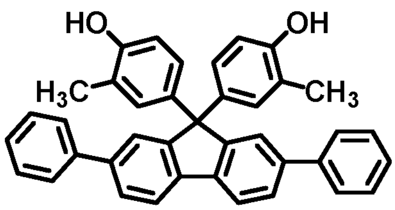

According to an exemplary embodiment of the present specification, Chemical Formula 3a is any one of the following compounds.

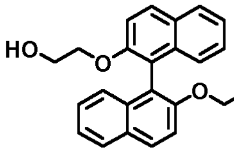
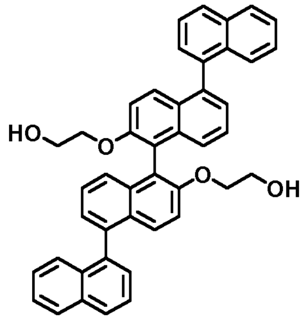
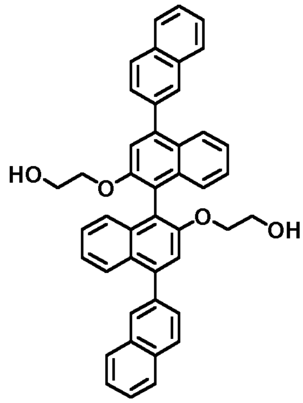

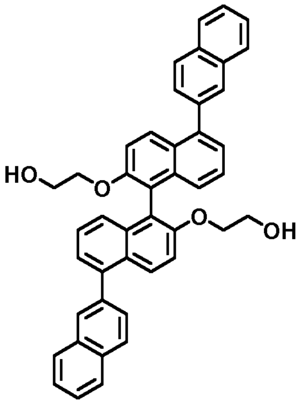
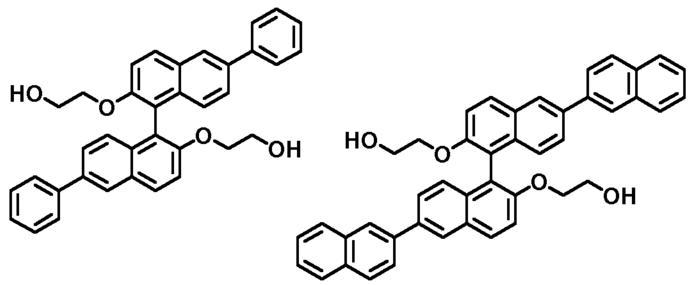

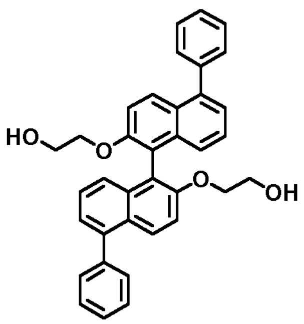

According to an exemplary embodiment of the present specification, the polycarbonate resin includes the compound of Chemical Formula 1a, the compound of Chemical Formula 2a, and the compound of Chemical Formula 3a, and the compound of Chemical Formula 1a, the compound of Chemical Formula 2a, and the compound of Chemical Formula 3a are included in an amount of 0.01 mole% to 99.98 mole% : 0.01 mole% to 99.98 mole% : 0.01 mole% to 99.98 mole%. Specifically, the compound of Chemical Formula 1a, the compound of Chemical Formula 2a, and the compound of Chemical Formula 3a are included in an amount of 0.1 mole% to 99.8 mole%: 0.1 mole% to 99.8 mole%: 0.1 mole% to 99.8 mole%, 1 mole% to 98 moleo: 1 mole% to 98mole% : 1 mole% to 98 mole%, 5 mole% to 90 moleo: 5 mole% to 90 mole% : 5 mole% to 90 mole%.

According to an exemplary embodiment of the present specification, the polycarbonate resin includes the compound of Chemical Formula 1a, two or more compounds of Chemical Formula 2a, and the compound of Chemical Formula 3a, and the compound of Chemical Formula 1a, two or more compounds of Chemical Formula 2a, and the compound of Chemical Formula 3a are included in an amount of 0.01 mole% to 99.98 mole% : 0.01 mole% to 99.98 mole% : 0.01 mole% to 99.98 mole%. Specifically, the compound of Chemical Formula 1a, the two or more compounds of Chemical Formula 2a, and the compound of Chemical Formula 3a are included in an amount of 0.1 mole% to 99.8 mole%: 0.1 mole% to 99.8 mole%: 0.1 mole% to 99.8 mole%, 1 mole% to 98 moleo: 1 mole% to 98mole% : 1 mole% to 98 mole%, 5 mole% to 90 moleo: 5 mole% to 90 mole% : 5 mole% to 90 mole%.

When Chemical Formulae 1a, 2a and 3a are included in the above content, the processability of the polycarbonate resin is excellent, the glass transition temperature (Tg) and refractive index can be adjusted, and the chain behavior of the polycarbonate resin can be made flexible, so that there is a technical effect advantageous for the injection processing of a molded article.

According to an exemplary embodiment of the present specification, the compound of Chemical Formula 1a, the compound of Chemical Formula 2a-1, and the compound of Chemical Formula 3a are included, and the compound of Chemical Formula 1a, the compound of Chemical Formula 2a-1, and the compound of Chemical Formula 3a are included in an amount of 0.01 mole% to 99.98 mole% : 0.01 mole% to 99.98 mole% : 0.01 mole% to 99.98 mole%. Specifically, the compound of Chemical Formula 1a, the compound of Chemical Formula 2a-1, and the compound of Chemical Formula 3a are included in an amount of 0.1 mole% to 99.8 mole%: 0.1 mole% to 99.8 mole%: 0.1 mole% to 99.8 mole%, 1 mole% to 98 moleo: 1 mole% to 98mole% : 1 mole% to 98 mole%, 5 mole% to 90 moleo: 5 mole% to 90 mole% : 5 mole% to 90 mole%.

According to an exemplary embodiment of the present specification, the compound of Chemical Formula 1a, the compound of Chemical Formula 2a-2, and the compound of Chemical Formula 3a are included, and the compound of Chemical Formula 1a, the compound of Chemical Formula 2a-2, and the compound of Chemical Formula 3a are included in an amount of 0.01 mole% to 99.98 mole% : 0.01 mole% to 99.98 mole% : 0.01 mole% to 99.98 mole%. Specifically, the compound of Chemical Formula 1a, the compound of Chemical Formula 2a-2, and the compound of Chemical Formula 3a are included in an amount of 0.1 mole% to 99.8 mole%: 0.1 mole% to 99.8 mole%: 0.1 mole% to 99.8 mole%, 1 mole% to 98 moleo: 1 mole% to 98mole% : 1 mole% to 98 mole%, 5 mole% to 90 moleo: 5 mole% to 90 mole% : 5 mole% to 90 mole%.

According to an exemplary embodiment of the present specification, the polycarbonate resin includes the compound of Chemical Formula 1a, the compound of Chemical Formula 2a-1, the compound of Chemical Formula 2a-2, and the compound of Chemical Formula 3a, and the compound of Chemical Formula 1a, the compound of Chemical Formula 2a-1, the compound of Chemical Formula 2a-2, and the compound of Chemical Formula 3a are included in an amount of 0.01 mole% to 99.97 mole% : 0.01 mole% to 99.97 mole% : 0.01 mole% to 99.97 mole% : 0.01 mole% to 99.97 moleo. Specifically, the compound of Chemical Formula 1a, the compound of Chemical Formula 2a-1, the compound of Chemical Formula 2a-2, and the compound of Chemical Formula 3a are included in an amount of 0.1 mole% to 99.7 mole%: 0.1 mole% to 99.7 mole%: 0.1 mole% to 99.7 mole%: 0.1 mole% to 99.7 mole%, 1 mole% to 97 moleo: 1 mole% to 97 mole% : 1 mole% to 97 moleo: 1 mole% to 97 mole%, 5 mole% to 85 mole%: 5 mole% to 85 mole%: 5 mole% to 85 mole%: 5 mole% to 85 mole%.

According to an exemplary embodiment of the present specification, the polycarbonate precursor is included in an amount of 50 parts by mol to 150 parts by mol, preferably 100 parts by mol with respect to 100 parts by mol of the total of the compound of Chemical Formula 1a, the compound of Chemical Formula 2a, and the compound of Chemical Formula 3a in the composition for preparing the polycarbonate resin.

According to an exemplary embodiment of the present specification, the polycarbonate precursor is included in an amount of 50 parts by mol to 150 parts by mol, preferably 100 parts by mol with respect to 100 parts by mol of the total of the compound of Chemical Formula 1a, the compound of Chemical Formula 2a-1, and the compound of Chemical Formula 3a in the composition for preparing the polycarbonate resin.

According to an exemplary embodiment of the present specification, the polycarbonate precursor is included in an amount of 50 parts by mol to 150 parts by mol, preferably 100 parts by mol with respect to 100 parts by mol of the total of the compound of Chemical Formula 1a, the compound of Chemical Formula 2a-2, and the compound of Chemical Formula 3a in the composition for preparing the polycarbonate resin.

According to an exemplary embodiment of the present specification, the polycarbonate precursor is included in an amount of 50 parts by mol to 150 parts by mol, preferably 100 parts by mol with respect to 100 parts by mol of the total of the compound of Chemical Formula 1a, the two or more compounds of Chemical Formula 2a, and the compound of Chemical Formula 3a in the composition for preparing the polycarbonate resin.

According to an exemplary embodiment of the present specification, the polycarbonate precursor is included in an amount of 50 parts by mol to 150 parts by mol, preferably 100 parts by mol with respect to 100 parts by mol of the total of the compound of Chemical Formula 1a, the compound of Chemical Formula 2a-1, the compound of Chemical Formula 2a-2, and the compound of Chemical Formula 3a in the composition for preparing the polycarbonate resin.

When the polycarbonate precursor is included in the above parts by mol, it is possible to prepare a polycarbonate resin that has excellent transparency, heat resistance, refractive index, birefringence and strength, and good processability.

The composition for preparing a polycarbonate resin may further include a solvent.

The solvent may be, for example, diphenyl ether, dimethylacetamide or methanol, but is not limited thereto, and any solvent applied in the art may be appropriately adopted.

The solvent may be included in an amount of 5 parts by weight to 60 parts by weight with respect to 100 parts by weight of the composition for preparing a resin.

The solvent may be included in an amount of preferably 5 parts by weight to 50 parts by weight, 7 parts by weight to 45 parts by weight or 8 parts by weight to 40 parts by weight with respect to 100 parts by weight of the composition for preparing a resin.

According to an exemplary embodiment of the present specification, the polycarbonate precursor is included

in an amount of 50 to 150 parts by weight with respect to 100 parts by weight of the composition for preparing the polycarbonate resin.

When the polycarbonate precursor is included in the above parts by weight, it is possible to prepare a polycarbonate resin that has excellent transparency, heat resistance, refractive index, birefringence and strength, and good processability.

In an exemplary embodiment of the present specification, the compound of Chemical Formula 1a may be included in an amount of 1 part by weight to 100 parts by weight or 1 part by weight to 99 parts by weight with respect to 100 parts by weight of the composition for preparing a polycarbonate resin.

The compound of Chemical Formula 1a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the compound of Chemical Formula 2a may be included in an amount of 0 part by weight to 99 parts by weight, or 1 part by weight to 99 parts by weight with respect to 100 parts by weight of the composition for preparing a polycarbonate resin.

The compound of Chemical Formula 2a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

The two or more compounds of Chemical Formula 2a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

The compound of Chemical Formula 2a-1 may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

The compound of Chemical Formula 2a-2 may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the compound of Chemical Formula 3a may be included in an amount of 0 part by weight to 99 parts by weight, or 1 part by weight to 99 parts by weight with respect to 100 parts by weight of the composition for preparing a polycarbonate resin.

The compound of Chemical Formula 3a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

According to an exemplary embodiment of the present specification, the polycarbonate precursor is a compound of the following Chemical Formula A.

[Chemical Formula A]

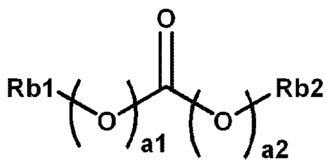

In Chemical Formula A,

Rb1 and Rb2 are the same as or different from each other, and are each independently a halogen group; a hydroxyl group; a substituted or unsubstituted alkyl group; a substituted or unsubstituted cycloalkyl group; or a substituted or unsubstituted aryl group, and

a1 and a2 are each 0 or 1.

According to an exemplary embodiment of the present specification, Rb1 and Rb2 are the same as or different from each other, and are each independently a halogen group; a substituted or unsubstituted straight-chained or branched alkyl group having 1 to 30 carbon atoms; a substituted or unsubstituted monocyclic or polycyclic cycloalkyl group having 6 to 30 carbon atoms; or a substituted or unsubstituted monocyclic or polycyclic aryl group having 6 to 30 carbon atoms.

According to an exemplary embodiment of the present specification, Rb1 and Rb2 are the same as or different from each other, and are each independently a halogen group; a substituted or unsubstituted straight-chained or branched alkyl group having 1 to 20 carbon atoms; a substituted or unsubstituted monocyclic or polycyclic cycloalkyl group having

6 to 20 carbon atoms; or a substituted or unsubstituted monocyclic or polycyclic aryl group having 6 to 20 carbon atoms.

According to an exemplary embodiment of the present specification, Rb1 and Rb2 are the same as or different from each other, and are each independently a halogen group; a straight-chained or branched alkyl group having 1 to 30 carbon atoms; a monocyclic or polycyclic cycloalkyl group having 6 to 30 carbon atoms; or a monocyclic or polycyclic aryl group having 6 to 30 carbon atoms.

According to an exemplary embodiment of the present specification, Rb1 and Rb2 are the same as or different from each other, and are each independently a halogen group; a straight-chained or branched alkyl group having 1 to 20 carbon atoms; a monocyclic or polycyclic cycloalkyl group having 6 to 20 carbon atoms; or a monocyclic or polycyclic aryl group having 6 to 20 carbon atoms.

According to an exemplary embodiment of the present specification, Rb1 and Rb2 are the same as or different from each other, and are each independently -Cl; a methyl group; an ethyl group; an n-propyl group; an n-butyl group; an isopropyl group; an isobutyl group; or a phenyl group.

According to an exemplary embodiment of the present specification, Chemical Formula A is any one selected from the following compounds.

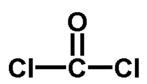
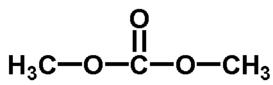
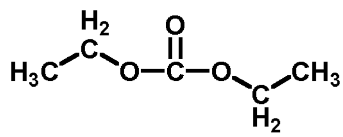

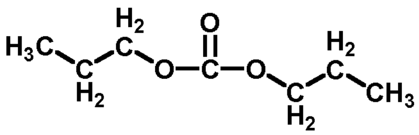
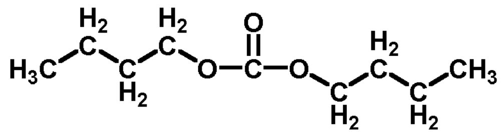

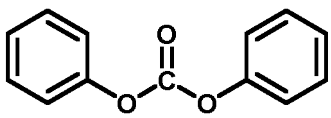
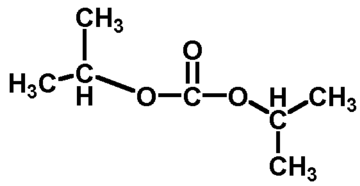

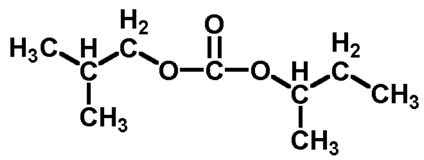

The polycarbonate precursor serves to link an additional comonomer, if necessary, and other specific examples thereof which may be applied in addition to the compound represented by Chemical Formula A include phosgene, triphosgene, diphosgene, bromophosgene, dimethyl carbonate, diethyl carbonate, dibutyl carbonate, dicyclohexyl carbonate, ditolyl carbonate, bis(chlorophenyl) carbonate, m-cresyl carbonate, dinaphthyl carbonate, bis(diphenyl) carbonate, bishaloformate, or the like, and any one of them or a mixture of two or more thereof may be used.

In an exemplary embodiment of the present specification, it is preferred that the polycarbonate resin is polymerized from the compound of Chemical Formula 1a; and the polycarbonate precursor of Chemical Formula A.

In an exemplary embodiment of the present specification, it is more preferred that the polycarbonate resin is polymerized from the compound of Chemical Formula 1a, the compound of Chemical Formula 2a, the compound of Chemical Formula 3a, and the polycarbonate precursor of Chemical Formula A.

In an exemplary embodiment of the present specification, it is more preferred that the polycarbonate resin is polymerized from the compound of Chemical Formula 1a, the compound of Chemical Formula 2a-1, the compound of Chemical Formula 3a, and the polycarbonate precursor of Chemical Formula A.

In an exemplary embodiment of the present specification, it is more preferred that the polycarbonate resin is polymerized from the compound of Chemical Formula 1a, the compound of Chemical Formula 2a-2, the compound of Chemical Formula 3a, and the polycarbonate precursor of Chemical Formula A.

In an exemplary embodiment of the present specification, it is more preferred that the polycarbonate resin is

polymerized from the compound of Chemical Formula 1a, the two or more compounds of Chemical Formula 2a, the compound of Chemical Formula 3a, and the polycarbonate precursor of Chemical Formula A.

In an exemplary embodiment of the present specification, it is more preferred that the polycarbonate resin is polymerized from the compound of Chemical Formula 1a, the compound of Chemical Formula 2a-1, the compound of Chemical Formula 2a-2, the compound of Chemical Formula 3a, and the polycarbonate precursor of Chemical Formula A.

The unit of the above-described Chemical Formula 1 may be formed by polymerizing the compound of Chemical Formula 1a and the polycarbonate precursor of Chemical Formula A, the unit of the above-described Chemical Formula 2 may be formed by polymerizing the compound of Chemical Formula 2a and the polycarbonate precursor of Chemical Formula A, and the unit of the above-described Chemical Formula 3 may be formed by polymerizing the compound of Chemical Formula 3a and the polycarbonate precursor of Chemical Formula A.

The unit of the above-described Chemical Formula 2-1 may be formed by polymerizing the compound of Chemical Formula 2a-1 and the polycarbonate precursor of Chemical Formula A, and the unit of the above-described Chemical Formulae 2-2 may be formed by polymerizing the compound of Chemical Formula 2a-2 and the polycarbonate precursor of Chemical Formula A.

By polymerizing the compound of Chemical Formula 1a and the polycarbonate precursor of Chemical Formula A, the unit of the above-described Chemical Formula 1 may be formed.

The compound of Chemical Formula 1a may be used in an amount of 1 part by mol to 100 parts by mol, and 1 part by mol to 99 parts by mol with respect to 100 parts by mol of the entire monomer constituting the polycarbonate resin including the unit of Chemical Formula 1.

The polycarbonate precursor of Chemical Formula A may be used in an amount of 50 parts by mol to 150 parts by mol with respect to 100 parts by mol of the entire monomer of the compound of Chemical Formula 1a constituting the resin.

By polymerizing the compound of Chemical Formula 2a and the polycarbonate precursor of Chemical Formula A, the unit of the above-described Chemical Formula 2 may be formed.

The compound of Chemical Formula 2a may be used in an amount of 1 part by mol to 100 parts by mol, and 1 part by mol to 99 parts by mol with respect to 100 parts by mol of the entire monomer constituting the polycarbonate resin including the unit of Chemical Formula 2.

The polycarbonate precursor of Chemical Formula A may be used in an amount of 50 parts by mol to 150 parts by mol with respect to 100 parts by mol of the entire monomer of the compound of Chemical Formula 2a constituting the resin.

By polymerizing the compound of Chemical Formula 2a-1 and the polycarbonate precursor of Chemical Formula A, the unit of the above-described Chemical Formula 2-1 may be formed.

The compound of Chemical Formula 2a-1 may be used in an amount of 1 part by mol to 100 parts by mol, and 1 part by mol to 99 parts by mol with respect to 100 parts by mol of the entire monomer constituting the polycarbonate resin including the unit of Chemical Formula 2-1.

The polycarbonate precursor of Chemical Formula A may be used in an amount of 50 parts by mol to 150 parts by mol with respect to 100 parts by mol of the entire monomer of the compound of Chemical Formula 2a-1 constituting the resin.

By polymerizing the compound of Chemical Formula 2a-2 and the polycarbonate precursor of Chemical Formula A, the unit of the above-described Chemical Formula 2-2 may be formed.

The compound of Chemical Formula 2a-2 may be used in an amount of 1 part by mol to 100 parts by mol, and 1 part by mol to 99 parts by mol with respect to 100 parts by mol of the entire monomer constituting the polycarbonate resin including the unit of Chemical Formula 2-2.

The polycarbonate precursor of Chemical Formula A may be used in an amount of 50 parts by mol to 150 parts by mol with respect to 100 parts by mol of the entire monomer of the compound of Chemical Formula 2a-2 constituting the resin.

By polymerizing the compound of Chemical Formula 3a and the polycarbonate precursor of Chemical Formula A, the unit of the above-described Chemical Formula 3 may be formed.

The compound of Chemical Formula 3a may be used in an amount of 1 part by mol to 100 parts by mol, and 1 part by mol to 99 parts by mol with respect to 100 parts by mol of the entire monomer constituting the polycarbonate resin including the unit of Chemical Formula 3.

The polycarbonate precursor of Chemical Formula A may be used in an amount of 50 parts by mol to 150 parts by mol with respect to 100 parts by mol of the entire monomer of the compound of Chemical Formula 3a constituting the resin.

The polycarbonate precursor of Chemical Formula A may be used in an amount of 50 parts by mol to 150 parts by mol with respect to 100 parts by mol of the total of one or more of the compound of Chemical Formula 1a, the compound of Chemical Formula 2a, and the compound of Chemical Formula 3a constituting the resin.

The polycarbonate precursor of Chemical Formula A may be used in an amount of 50 parts by mol to 150 parts

by mol with respect to 100 parts by mol of the total of one or more of the compound of Chemical Formula 1a, the compound of Chemical Formula 2a-1, and the compound of Chemical Formula 3a constituting the resin.

The polycarbonate precursor of Chemical Formula A may be used in an amount of 50 parts by mol to 150 parts by mol with respect to 100 parts by mol of the total of one or more of the compound of Chemical Formula 1a, the compound of Chemical Formula 2a-2, and the compound of Chemical Formula 3a constituting the resin.

The polycarbonate precursor of Chemical Formula A may be used in an amount of 50 parts by mol to 150 parts by mol with respect to 100 parts by mol of the total of the compound of Chemical Formula 1a, the two or more compound of Chemical Formula 2a, and the compounds of Chemical Formula 3a constituting the resin.

The polycarbonate precursor of Chemical Formula A may be used in an amount of 50 parts by mol to 150 parts by mol with respect to 100 parts by mol of the total of the compound of Chemical Formula 1a, the compound of Chemical Formula 2a-1, the compound of Chemical Formula 2a-2, and the compound of Chemical Formula 3a constituting the resin.

For the polymerization of the resin according to the present specification, methods known in the art may be used.

It is preferred that the polymerization is performed by a melt polycondensation method.

In the melt polycondensation method, a catalyst may be further applied as needed using the composition for preparing a polycarbonate resin, and melt polycondensation may be performed under heating and further under normal pressure or reduced pressure while removing by-products by an ester exchange reaction. As the catalyst, a material generally applied in the art may be adopted.

Specifically, in the melt polycondensation method, it is preferred that the compound of Chemical Formula 1a; the compound of Chemical Formula 2a; the compound of Chemical Formula 3a; and the polycarbonate precursor are melted in a reaction vessel, and then a reaction is performed in a state where a by-product compound is allowed to stay.

In the melt polycondensation method, it is preferred that the compound of Chemical Formula 1a; the compound of Chemical Formula 2a-1; the compound of Chemical Formula 3a; and the polycarbonate precursor are melted in a reaction vessel, and then a reaction is performed in a state where a by-product compound is allowed to stay.

Further, in the melt polycondensation method, it is preferred that the compound of Chemical Formula 1a; the compound of Chemical Formula 2a-2; the compound of Chemical Formula 3a; and the polycarbonate precursor are melted in a reaction vessel, and then a reaction is performed in a state where a by-product compound is allowed to stay.

More specifically, in the melt polycondensation method, it is preferred that the compound of Chemical Formula 1a; the two or more compounds of Chemical Formula 2a; the compound of Chemical Formula 3a; and the polycarbonate precursor are melted in a reaction vessel, and then a reaction is performed in a state where a by-product compound is allowed to stay.

Even more specifically, it is preferred that the compound of Chemical Formula 1a; the compound of Chemical Formula 2a-1; the compound of Chemical Formula 2a-2; the compound of Chemical Formula 3a; and the polycarbonate precursor are melted in a reaction vessel, and then a reaction is performed in a state where a by-product compound is allowed to stay.

In order to allow the by-product compound to stay, the reaction device may be closed, or pressure may be controlled by reducing pressure or increasing pressure.

The reaction time of this process is 20 minutes or more and 600 minutes or less, preferably 40 minutes or more and 450 minutes or less, and more preferably 60 minutes or more and 350 minutes or less.

In this case, when the by-product compound is distilled off immediately after being produced, a resin to be finally obtained has a small content of high molecular weight materials. However, when the by-product compound is allowed to stay in the reaction vessel for a certain period of time, the finally obtained resin is obtained to have a large content of high molecular weight materials.

The melt polycondensation method may be performed continuously or in a batch manner. The reaction device used for performing the reaction may be a vertical type equipped with a soken impeller, an anchor type impeller, a Maxblend impeller, a helical ribbon type impeller or the like, may be a horizontal type equipped with a paddle blade, a lattice blade, a spectacle-shaped blade or the like, and may be an extruder type equipped with a screw. In addition, it is desirably performed to use a reaction device in which these reaction devices are appropriately combined in consideration of the viscosity of the polymer.

In the method for preparing a polycarbonate resin used in the present specification, the catalyst may be removed or deactivated in order to maintain heat stability and hydrolysis stability after the completion of the polymerization reaction. A method of deactivating the catalyst by adding a known acidic material in the art may be preferably performed.

As the acidic material, for example, esters such as butyl benzoate, aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid

esters such as diethyl phenylphosphonate; phosphines such as triphenylphosphine and bis(diphenylphosphino)ethane; boric acids such as boric acid and phenylboric acid; aromatic sulfonic acid salts such as dodecylbenzenesulfonic acid tetrabutylphosphonium salts; organic halides such as stearic acid chloride, benzoyl chloride and p-toluenesulfonic acid chloride; alkylsulfuric acids such as dimethylsulfuric acid; organic halides such as benzyl chloride, and the like are preferably used.

The acidic material may be used in an amount of 0.1 parts by mol to 5 parts by mol, preferably 0.1 parts by mol to 1 part by mol with respect to 100 parts by mol of the catalyst.

When the amount of the acidic material is smaller than 0.1 parts by mol, the deactivation effect becomes insufficient, which is not preferred. Further, when the amount exceeds 5 parts by mol, the heat resistance of the resin deteriorates and the molded article is easily colored, which is not preferred.

After the catalyst is deactivated, a process of devolatilizing and removing a low boiling point compound in the resin may be further performed under a pressure of 0.1 mmHg to 1 mmHg and at a temperature of 200°C to 350°C. In this process, a horizontal-type apparatus equipped with a stirring blade having excellent surface renewal ability such as a paddle blade, a lattice blade, and a spectacle-shaped blade, or a thin film evaporator is preferably used.

It is preferred that the content of foreign materials in the resin of the present specification is as small as possible, and filtration of a melting raw material, filtration of a catalyst solution, and the like are preferably performed.

The mesh of the filter used in the filtration is preferably 5 μm or less, and more preferably 1 μm or less. In addition, filtration of the produced resin using a polymer filter is preferably performed. The mesh of the polymer filter is preferably 100 μm or less, and more preferably 30 μm or less. Furthermore, a process of obtaining a resin pellet needs to be performed in a low-dust environment, and the environment is preferably Class 6 or lower, and more preferably Class 5 or lower.

Further, examples of a method of molding a molded article including the polycarbonate resin include compression molding, molds, roll processing, extrusion molding, stretching, and the like in addition to injection molding, but are not limited thereto.

Another exemplary embodiment of the present specification provides a polycarbonate resin composition including the resin according to the above-described exemplary embodiments.

In an exemplary embodiment of the present specification, the polycarbonate resin may be included in an amount of 1 part by weight to 80 parts by weight based on 100 parts by weight of the polycarbonate resin composition.

In an exemplary embodiment of the present specification, the polycarbonate resin composition may further include a solvent. The solvent may be, for example, dimethylacetamide or 1,2-dichlorobenzene.

The solvent may be included in an amount of 20 parts by weight to 99 parts by weight based on 100 parts by weight of the polycarbonate resin composition.

The polycarbonate resin composition may further include an additional monomer in addition to the compound of Chemical Formula 1a; the compound of Chemical Formula 2a; and the compound of Chemical Formula 3a. The additional monomer is not particularly limited, and a monomer generally applied in the art related to the polycarbonate may be appropriately adopted as long as the main physical properties of the polycarbonate resin composition are not changed. The additional monomer may be used in an amount of 1 part by mol to 50 parts by mol with respect to 100 parts by mol of the entire monomer constituting the resin including the unit of Chemical Formula 1, the unit of Chemical Formula 2 and the unit of Chemical Formula 3.

The polycarbonate resin composition may further include one or more selected from the group consisting of an additive, for example, an antioxidant, a plasticizer, an anti-static agent, a nucleating agent, a flame retardant, a lubricant, an impact modifier, a fluorescent brightener, a UV absorber, an inorganic additive, a pigment and a dye, if necessary, in addition to the polycarbonate resin.

The additive may be included in an amount of 1 part by weight to 99 parts by weight based on 100 parts by weight of the polycarbonate resin composition.

The type of antioxidant, plasticizer, anti-static agent, nucleating agent, flame retardant, lubricant, impact modifier, fluorescent brightener, UV absorber, inorganic additive, pigment or dye is not particularly limited, and those applied in the art may be appropriately adopted.

Still another exemplary embodiment of the present specification provides a molded article including the resin composition according to the above-described exemplary embodiments.

In an exemplary embodiment of the present specification, the molded article may be prepared from the polycarbonate resin composition or a cured product thereof.

As an example of a method of preparing the molded article, it is possible to include mixing the polycarbonate resin and the additive well using a mixer, preparing the resulting mixture as a pellet by extrusion molding the mixture using an extruder, drying the pellet, and then injecting the pellet using an injection molder.

In an exemplary embodiment of the present specification, the molded article is an optical lens.

In an exemplary embodiment of the present specification, the optical lens has a thickness of 0.1 um to 30 mm.

An optical lens according to an exemplary embodiment of the present specification has a high refractive index,

and thus may implement an optical lens with a small thickness.

The optical lens is manufactured using the polycarbonate resin, has a small thickness, a high refractive index and high transparency, and may be preferably applied to camera, mobile, vehicle, and self-driving sensor lenses.

In an exemplary embodiment of the present specification, the molded article is an optical fiber.

In an exemplary embodiment of the present specification, the molded article is an optical film or optical thin film. The optical film or optical thin film is manufactured using the polycarbonate resin, has a small thickness and excellent light harvesting effect and light diffusion effect, and may be preferably applied to backlight modules, flat lenses, and meta lenses of liquid crystal displays, and the like.

In an exemplary embodiment of the present specification, the optical film or optical thin film has a thickness of 0.1 nm to 10 mm.

In an exemplary embodiment of the present specification, the molded article is an optical resin. The optical resin is manufactured using the polycarbonate resin, and has a low optical loss due to its small thickness, high refractive index and low birefringence.

In an exemplary embodiment of the present specification, the molded article is an LED encap.

[Mode for Invention]

Hereinafter, the present specification will be exemplified in more detail through Examples.

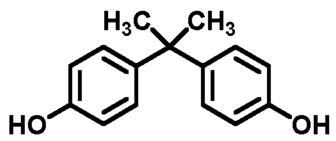

**monomer 1-1**

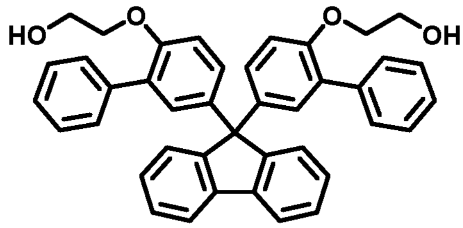

**monomer 2-1**

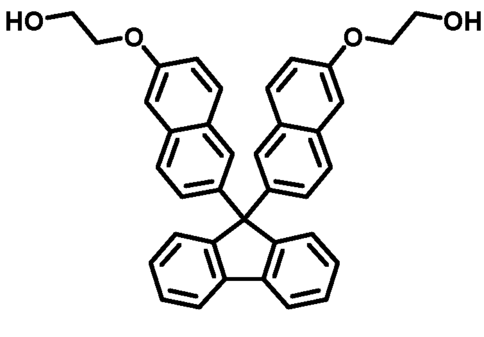

**monomer 2-2**

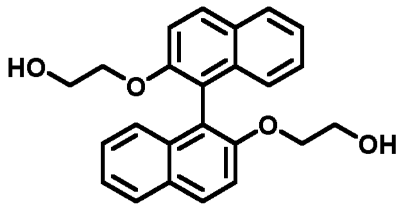

**monomer 3-1**

Preparation Example 1.

1.141 g (0.005 mol) of Monomer 1-1, 26.582 g (0.045 mol) of Monomer 2-1, 18.708 g (0.050 mol) of Monomer 3-1, and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 1, which is a polymerized polymer molten resin, was obtained by blowing nitrogen into the reactor to create a normal pressure atmosphere.

Preparation Example 2.

6.620 g (0.029 mol) of Monomer 1-1, 16.159 g (0.030 mol) of Monomer 2-2, 15.340 g (0.041 mol) of Monomer 3-1, and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 2, which is a polymerized polymer molten resin, was obtained by blowing nitrogen into the reactor to create a normal pressure atmosphere.

Preparation Example 3.

22.829g (0.100 mol) of Monomer 1-1 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 1, which is a polymerized polymer molten resin, was obtained by blowing nitrogen into the reactor to create a normal pressure atmosphere.

Preparation Example 4.

37.415g (0.100 mol) of Monomer 3-1 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 2, which is a polymerized polymer molten resin, was obtained by blowing nitrogen into the reactor to create a normal pressure atmosphere.

Preparation Example 5.

53.864 g (0.100 mol) of Monomer 2-2 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 3, which is a polymerized polymer molten resin, was obtained by blowing nitrogen into the reactor to create a normal pressure atmosphere.

Preparation Example 6.

59.072g (0.100 mol) of Monomer 2-1 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 4, which is a polymerized polymer molten resin, was obtained by blowing nitrogen into the reactor to create a normal pressure atmosphere.

Preparation Examples 7 to 9

Comparative Example Resins 5 to 7 were each prepared in the same manner as in Preparation Example 1, except that Monomers 1-1, 2-1, 2-2 and 3-1 were each used at the molar ratios shown in the following Table 1.

Examples 1 and 2 and Comparative Examples 1 to 7.

A high shear viscosity was measured for each of the resin samples polymerized in Preparation Examples 1 to 9. The high shear viscosity was measured at 250°C and 10 Hz to 63 Hz by putting 2 g to 5g of the resin sample into a hybrid rheometer (discovery (HR-2)), and a melt index (MI) was measured using a Melt indexer (Mi 2.2) manufactured by Goettfert. A sample was dried in an oven at 120°C for 5 hours or more, the dried sample was put into a device and, melted for 5 minutes at a measurement temperature of 260°C, and then the weight of the sample passing through the nozzle for 5 seconds when applying pressure with a weight of 2.16 kg was measured and converted into a unit of g/10 min to calculate the Melt Index (MI melt index), and the results are shown in the following Table 1. The results are shown in the following Table 1.

[Table 1]

| | | Viscosi ty (Pa·s) | Viscosi ty (Pa·s) | Refracti ve index | Formulation (molar ratio) | | | | |
|---|---|---|---|---|---|---|---|---|---|
| | | @ 250°C, 10 Hz | @ 250°C, 63Hz | | MI | Monom er 1-1 | Monom er 2-1 | Monom er 2-2 | Monom er 3-1 |
| Example 1 | Resin 1 | 110 | 81.9 | 1.659 | 68 | 5 | 45 | - | 50 |
| Example 2 | Resin 2 | 258 | 171 | 1.659 | 25 | 29 | - | 30 | 41 |
| Comparati ve Example 1 | Comparati ve Example Resin 1 | 432 | 345 | 1.638 | 27 | 100 | - | - | - |
| Comparati ve Example 2 | Comparati ve Example Resin 2 | 1.43 | 0.8 | 1.668 | 25 0 | - | - | - | 100 |
| Comparati ve Example 3 | Comparati ve Example Resin 3 | 504 | 330 | 1.686 | 3 | - | - | 100 | - |
| Comparative Example 4 | Comparative Example Resin 4 | 789 | 368 | 1.654 | 16 | - | 100 | - | - |
| Comparati ve Example 5 | Comparati ve Example Resin 5 | 2.2 | 4.1 | 1.628 | 20 0 | 60 | - | | 40 |
| Comparati ve Example 6 | Comparati ve Example Resin 6 | 1425 | 544 | 1.664 | 3 | 15 | 40 | 45 | - |
| Comparati ve Example 7 | Comparati ve Example Resin 7 | 1606 | 755 | 1.673 | 3 | - | 40 | 50 | 10 |

In Table 1, it can be seen that the resins of Examples 1 and 2, which are each the polycarbonate resin according to an exemplary embodiment of the present specification, include the first unit, the second unit and the third unit, and the polycarbonate resin has a high shear viscosity of 10 Pa·s to 260 Pa·s at 250°C.

Specifically, the resins of Examples 1 and 2 have a high shear viscosity of 10 Pa·s to 260 Pa·s at any one or more of 250°C and 10 Hz and 250°C and 63 Hz (250°C and 10 Hz and/or 250°C and 63 Hz).

In contrast, Comparative Examples 1 to 4 are polycarbonate resins including only any one of the first unit, the second unit or the third unit, Comparative Example 5 is a polycarbonate resin including only the first unit and the third unit, Comparative Example 6 is a polycarbonate resin including only the first unit and the second unit, and Comparative Example 7 is a polycarbonate resin including only the second unit and the third unit.

Specifically, although Examples 1 and 2 include all of the first unit, second unit and third unit of the present specification, Comparative Examples 1 to 4 include only any one of the above units, and Comparative Examples 5 to 7 include only the two units of the first to third units among the above units. Therefore, Comparative Examples 1 to 7 have a high shear viscosity of less than 10 Pa·s or more than 260 Pa·s at 250°C. When the high shear viscosity is less than 10 Pa·s, it is difficult to process the resin because the viscosity is very low, and when the high shear viscosity exceeds 260 Pa·s, the processing load becomes large, so that phenomena such as weld line, crack, warpage, and birefringence may occur during injection molding.

Although Comparative Examples 2, 3 and 7 have a higher refractive index than Examples 1 and 2, the high shear viscosity range is less than 10 Pa·s or exceeds 260 Pa·s at 250°C, so that it is difficult to achieve commercialization because it is difficult to process the resin.

Therefore, since the polycarbonate resin according to an exemplary embodiment of the present specification satisfies a high shear viscosity of 10 Pa·s to 260 Pa·s at 250°C, processing load is low, so that phenomena such as weld line, crack, warpage, and birefringence are reduced during injection molding.

## Claims

1. A polycarbonate resin having a high shear viscosity of 10 Pa·s to 260 Pa·s at 250°C.

2. A polycarbonate resin comprising a first unit of the following Chemical Formula 1; a second unit of the following Chemical Formula 2; and a third unit of the following Chemical Formula 3:

[Chemical Formula 1]

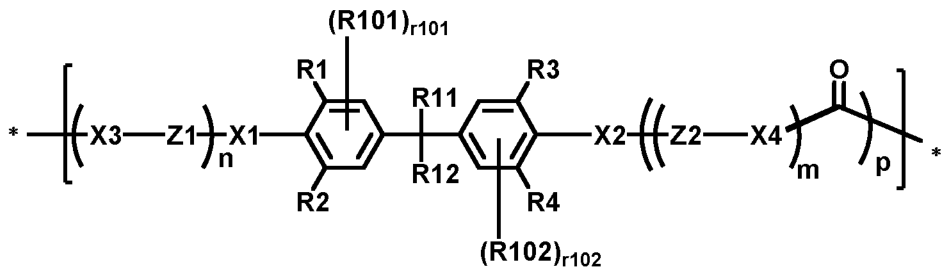

wherein, in Chemical Formula 1,

X1 to X4 are the same as or different from each other, and are each independently O or S,

R1 to R4 are the same as or different from each other, and are each independently hydrogen; a substituted or unsubstituted alkyl group; a substituted or unsubstituted cycloalkyl group; a substituted or unsubstituted aryl group; a fused ring group of a substituted or unsubstituted aromatic hydrocarbon ring and an aliphatic hydrocarbon ring; or a substituted or unsubstituted heteroaryl group,

Z1 and Z2 are the same as or different from each other, and are each independently a substituted or unsubstituted alkylene group; or a substituted or unsubstituted cycloalkylene group,

R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,

R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,

r101 is 1 or 2, and when r101 is 2, two R101's are the same as or different from each other,
r102 is 1 or 2, and when r102 is 2, two R102's are the same as or different from each other,
m and n are each an integer from 0 to 6,
p is an integer of 1 to 6,
when m, n and p are each 2 or higher, two or more structures in each parenthesis are the same as or different from each other, and
* means a moiety linked to the main chain of the resin,

[Chemical Formula 2]

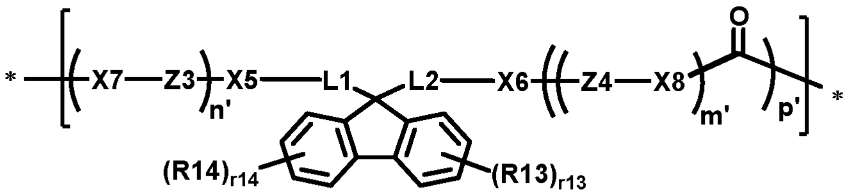

in Chemical Formula 2,
X5 to X8 are the same as or different from each other, and are each independently O or S,
L1 and L2 are the same as or different from each other, and are each independently a substituted or unsubstituted arylene group; or a substituted or unsubstituted heteroarylene group,
R13 and R14 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
Z3 and Z4 are the same as or different from each other, and are each independently a substituted or unsubstituted alkylene group; or a substituted or unsubstituted cycloalkylene group,
m' and n' are each an integer from 0 to 6,
p' is an integer from 1 to 6,
r13 and r14 are each an integer from 1 to 4,
when r13, r14, m', n' and p' are each 2 or higher, two or more structures in each parenthesis are the same as or different from each other, and
* means a moiety linked to the main chain of the resin,

[Chemical Formula 3]

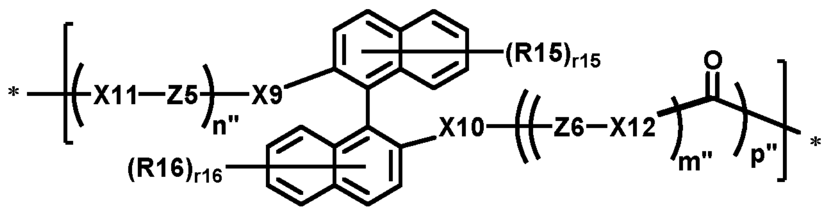

in Chemical Formula 3,
X9 to X12 are the same as or different from each other, and are each independently O or S,
Z5 and Z6 are the same as or different from each other, and are each independently a substituted or unsubstituted alkylene group; or a substituted or unsubstituted cycloalkylene group,
R15 and R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
m" and n" are each an integer from 0 to 6,
p" is an integer from 1 to 6,
r15 and r16 are each an integer from 1 to 6,
when r15, r16, m", n" and p" are each 2 or higher, two or more structures in each parenthesis are the same as or different from each other, and

* means a moiety linked to the main chain of the resin.

**3.** The polycarbonate resin of claim 1, wherein the polycarbonate resin comprises a first unit of the following Chemical Formula 1; a second unit of the following Chemical Formula 2; and a third unit of the following Chemical Formula 3:

[Chemical Formula 1]

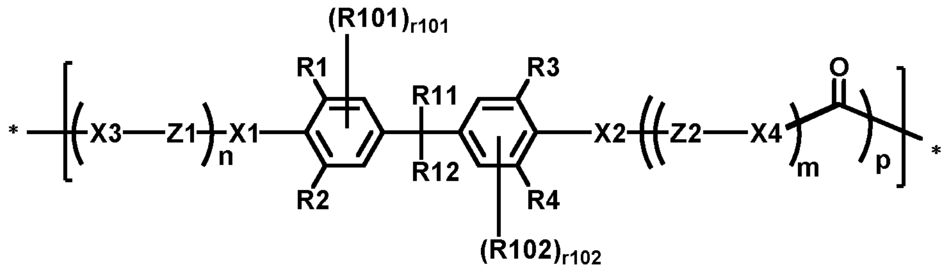

in Chemical Formula 1,

X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a fused ring group of a substituted or unsubstituted aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6,
p is an integer of 1 to 6,
when m, n and p are each 2 or higher, two or more structures in each parenthesis are the same as or different from each other, and
* means a moiety linked to the main chain of the resin,

[Chemical Formula 2]

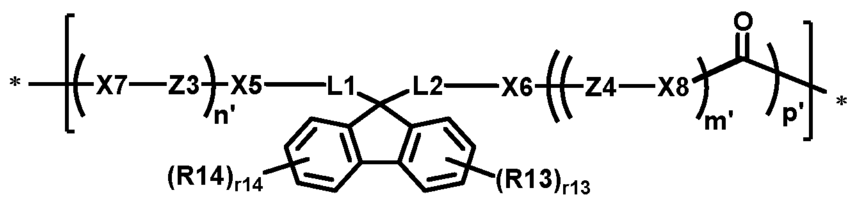

in Chemical Formula 2,

X5 to X8 are the same as or different from each other, and are each independently O or S,
L1 and L2 are the same as or different from each other, and are each independently a substituted or unsubstituted arylene group; or a substituted or unsubstituted heteroarylene group,
R13 and R14 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,

Z3 and Z4 are the same as or different from each other, and are each independently a substituted or unsubstituted alkylene group; or a substituted or unsubstituted cycloalkylene group,
m' and n' are each an integer from 0 to 6,
p' is an integer from 1 to 6,
r13 and r14 are each an integer from 1 to 4,
when r13, r14, m', n' and p' are each 2 or higher, two or more structures in each parenthesis are the same as or different from each other, and
* means a moiety linked to the main chain of the resin, and

[Chemical Formula 3]

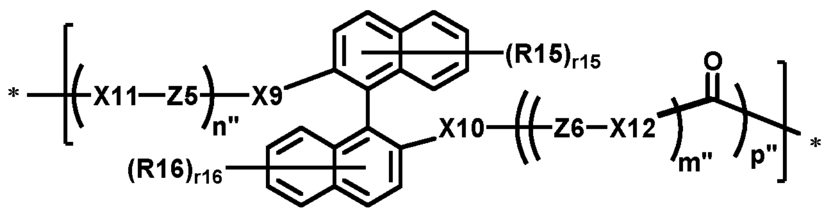

in Chemical Formula 3,
X9 to X12 are the same as or different from each other, and are each independently O or S,
Z5 and Z6 are the same as or different from each other, and are each independently a substituted or unsubstituted alkylene group; or a substituted or unsubstituted cycloalkylene group,
R15 and R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
m" and n" are each an integer from 0 to 6,
p" is an integer from 1 to 6,
r15 and r16 are each an integer from 1 to 6,
when r15, r16, m", n" and p" are each 2 or higher, two or more structures in each parenthesis are the same as or different from each other, and
* means a moiety linked to the main chain of the resin.

4. The polycarbonate resin of any one of claims 1 to 3, wherein the polycarbonate resin has a high shear viscosity of 30 Pa·s to 260 Pa·s at 250°C.

5. The polycarbonate resin of any one of claims 1 to 3, wherein the polycarbonate resin has a refractive index of 1.6 to 1.8 at 587 nm.

6. The polycarbonate resin of any one of claims 1 to 3, wherein the polycarbonate resin has a melt index (MI) of 150 or less.

7. The polycarbonate resin of claim 2 or 3, wherein Chemical Formula 2 is any one or more of the following Chemical Formulae 2-1 and 2-2:

[Chemical Formula 2-1]

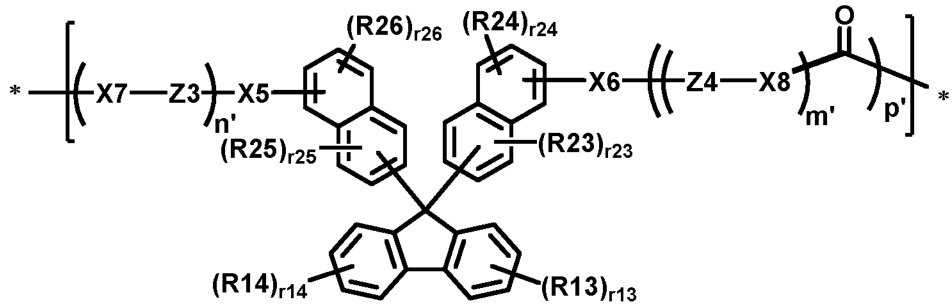

[Chemical Formula 2-2]

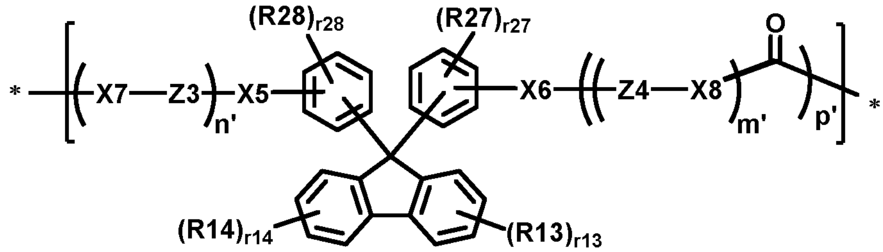

in Chemical Formulae 2-1 and 2-2,
the definitions of *, X5 to X8, Z3, Z4, R13, r13, R14, r14, n', m' and p' are the same as those defined in Chemical Formula 2,
R23 to R28 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r23 to r26 are each an integer from 1 to 3,
r27 and r28 are each an integer from 1 to 4, and
when r23 to r28 are each 2 or higher, two or more structures in each parenthesis are the same as or different from each other.

**8.** The polycarbonate resin of claim 2 or 3, wherein the polycarbonate resin comprises two or more second units of Chemical Formula 2.

**9.** A method for preparing the polycarbonate resin according to any one of claims 1 to 3, the method comprising: polymerizing a composition for preparing a polycarbonate resin comprising a compound of the following Chemical Formula 1a;

a compound of the following Chemical Formula 2a;
a compound of the following Chemical Formula 3a; and
a polycarbonate precursor, wherein the polycarbonate resin has a high shear viscosity of 10 Pa·s to 260 Pa·s at 250°C:

[Chemical Formula 1a]

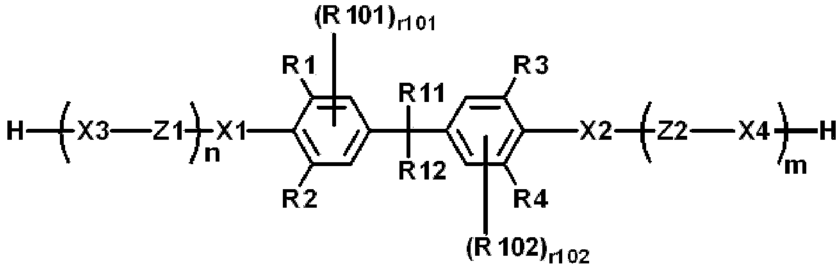

in Chemical Formula 1a,
X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a fused ring group of a substituted or unsubstituted aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6, and
when m and n are each 2 or higher, two or more structures in each parenthesis are the same as or different from each other,

[Chemical Formula 2a]

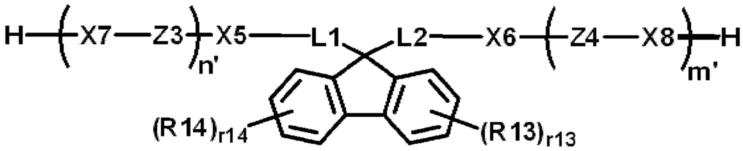

[Chemical Formula 3a]

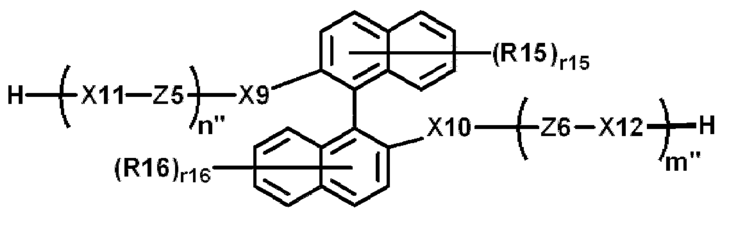

in Chemical Formulae 2a and 3a,
X5 to X12 are the same as or different from each other, and are each independently O or S,
L1 and L2 are the same as or different from each other, and are each independently a substituted or unsubstituted arylene group; or a substituted or unsubstituted heteroarylene group,
Z3 to Z6 are the same as or different from each other, and are each independently a substituted or unsubstituted alkylene group; or a substituted or unsubstituted cycloalkylene group,
R13 to R16 are the same as or different from each other, and are each independently hydrogen; a substituted or unsubstituted alkyl group; a substituted or unsubstituted cycloalkyl group; a substituted or unsubstituted aryl

group; or a substituted or unsubstituted heteroaryl group, or are bonded to an adjacent group to form a substituted or unsubstituted hydrocarbon ring,
r13 and r14 are each an integer from 1 to 4,
r15 and r16 are each an integer from 1 to 6,
m', m", n' and n" are each an integer from 0 to 6, and
when r13 to r16, m', m", n' and n" are each 2 or higher, two or more structures in each parenthesis are the same as or different from each other.

**10.** The method of claim 9, wherein in the method for preparing the polycarbonate resin, the compound of Chemical Formula 1a, the compound of Chemical Formula 2a, and the compound of Chemical Formula 3a are comprised in an amount of 0.01 mole% to 99.98 mole% : 0.01 mole% to 99.98 mole% : 0.01 mole% to 99.98 mole%.

**11.** The method of claim 9, wherein the polycarbonate precursor is a compound of the following Chemical Formula A:

[Chemical Formula A]

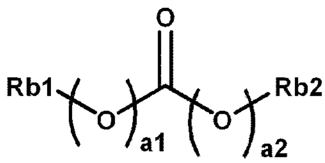

in Chemical Formula A,
Rb1 and Rb2 are the same as or different from each other, and are each independently a halogen group; a hydroxyl group; a substituted or unsubstituted alkyl group; a substituted or unsubstituted cycloalkyl group; or a substituted or unsubstituted aryl group, and
a1 and a2 are each 0 or 1.

**12.** A polycarbonate resin composition comprising the polycarbonate resin according to any one of claims 1 to 3.

**13.** A molded article comprising the polycarbonate resin composition according to claim 12.

**14.** The molded article of claim 13, wherein the molded article is an optical lens.

## INTERNATIONAL SEARCH REPORT

International application No.
**PCT/KR2023/012404**

**A. CLASSIFICATION OF SUBJECT MATTER**

**C08G 64/16**(2006.01)i; **C08G 64/08**(2006.01)i; **C08L 69/00**(2006.01)i; **G02B 1/04**(2006.01)i; **C08G 64/04**(2006.01)i

According to International Patent Classification (IPC) or to both national classification and IPC

**B. FIELDS SEARCHED**

Minimum documentation searched (classification system followed by classification symbols)

C08G 64/16(2006.01); C08F 2/50(2006.01); C08F 220/26(2006.01); C08G 63/64(2006.01); C08G 63/672(2006.01); C08G 63/688(2006.01); C08G 64/04(2006.01); C08G 64/06(2006.01); C08G 64/30(2006.01); G03F 7/027(2006.01); G03F 7/032(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 폴리카보네이트(polycarbonate), 알코올(alcohol), 점도 (viscosity)

**C. DOCUMENTS CONSIDERED TO BE RELEVANT**

| Category* | Citation of document, with indication, where appropriate, of the relevant passages | Relevant to claim No. |
|---|---|---|
| X | KR 10-2019-0140074 A (TEIJIN LIMITED) 18 December 2019 (2019-12-18)<br>See claims 1-15; paragraphs [0092]-[0344]; and table 1. | 1-14 |
| A | KR 10-1532341 B1 (CONCO LIMITED) 29 June 2015 (2015-06-29)<br>See entire document. | 1-14 |
| A | JP 2010-055052 A (HITACHI CHEM CO., LTD.) 11 March 2010 (2010-03-11)<br>See entire document. | 1-14 |
| A | JP 2020-117610 A (TEIJIN LTD.) 06 August 2020 (2020-08-06)<br>See entire document. | 1-14 |
| A | CN 112250852 A (WANHUA CHEMICAL GROUP CO., LTD.) 22 January 2021 (2021-01-22)<br>See entire document. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 December 2023** | **12 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/012404**

| Patent document cited in search report | Publication date (day/month/year) | Patent family member(s) | Publication date (day/month/year) |
|---|---|---|---|
| KR 10-2019-0140074 A | 18 December 2019 | CN 110741030 A | 31 January 2020 |
| | | CN 110741030 B | 17 June 2022 |
| | | CN 113474685 A | 01 October 2021 |
| | | EP 3677614 A1 | 08 July 2020 |
| | | EP 3677614 A4 | 08 July 2020 |
| | | EP 3933456 A1 | 05 January 2022 |
| | | EP 3933456 A4 | 22 June 2022 |
| | | JP 2020-012094 A | 23 January 2020 |
| | | JP 7227345 B2 | 21 February 2023 |
| | | KR 10-2021-0097779 A | 09 August 2021 |
| | | KR 10-2362026 B1 | 10 February 2022 |
| | | TW 201920352 A | 01 June 2019 |
| | | TW 202045582 A | 16 December 2020 |
| | | TW I787317 B | 21 December 2022 |
| | | US 11261294 B2 | 01 March 2022 |
| | | US 2021-0147621 A1 | 20 May 2021 |
| | | US 2022-0146713 A1 | 12 May 2022 |
| | | WO 2019-044214 A1 | 07 March 2019 |
| | | WO 2020-175577 A1 | 03 September 2020 |
| KR 10-1532341 B1 | 29 June 2015 | None | |
| JP 2010-055052 A | 11 March 2010 | JP 5476739 B2 | 23 April 2014 |
| JP 2020-117610 A | 06 August 2020 | JP 7221706 B2 | 14 February 2023 |
| CN 112250852 A | 22 January 2021 | CN 112250852 B | 13 January 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220107093
- KR 1020220155556
- KR 1020220155560
- KR 1020220155561
- KR 1020220155562